(19) Europäisches Patentamt
European Patent Office
Office européen des brevets

(11) EP 3 284 784 A1

(12) EUROPEAN PATENT APPLICATION
published in accordance with Art. 153(4) EPC

(43) Date of publication:
**21.02.2018 Bulletin 2018/08**

(21) Application number: **16780083.8**

(22) Date of filing: **13.04.2016**

(51) Int Cl.:
***C08L 33/12*** *(2006.01)* ***C08F 8/48*** *(2006.01)*
***C08F 20/14*** *(2006.01)* ***C08K 5/3475*** *(2006.01)*
***C08K 5/3492*** *(2006.01)* ***C08L 51/06*** *(2006.01)*
***C08L 53/00*** *(2006.01)*

(86) International application number:
**PCT/JP2016/061926**

(87) International publication number:
**WO 2016/167292 (20.10.2016 Gazette 2016/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.04.2015 JP 2015085457**

(71) Applicant: **Kuraray Co., Ltd.**
**Okayama 710-0801 (JP)**

(72) Inventors:
- **ABE, Toru**
**Tainai-shi**
**Niigata 959-2691 (JP)**
- **NAKAHARA, Atsuhiro**
**Tainai-shi**
**Niigata 959-2691 (JP)**

(74) Representative: **Müller-Boré & Partner Patentanwälte PartG mbB**
**Friedenheimer Brücke 21**
**80639 München (DE)**

# (54) METHACRYLIC RESIN COMPOSITION

(57) A methacrylic resin composition comprising 75 to 99.8% by mass of a methacrylic resin [A] ; 0.1 to 15% by mass of an ultraviolet absorber [B]; and 0.1 to 10% by mass of a compound [C] being a block copolymer or a graft copolymer, the block copolymer or the graft copolymer having a weight average molecular weight of 32 thousand to 300 thousand, a shaped product comprising the methacrylic resin composition, and a method for producing film, comprising shaping the methacrylic resin composition into a film by melt extrusion method using a pinning.

EP 3 284 784 A1

## Description

TECHNICAL FIELD

The present invention relates to a methacrylic resin composition. More specifically, the present invention relates to a methacrylic resin composition that can be subjected to a melt-forming while mold smudging and the like are prevented, and that is suitable for use to produce a shaped product being hard to cause a bleed-out of an additive such as an ultraviolet absorber or the like.

BACKGROUND ART

Methacrylic resins have excellent transparency and are therefore useful as a material of shaped products to be used for optical components, lighting components, signboard components, decorating components, and the like. An ultraviolet absorber is kneaded into a methacrylic resins for preventing degradation of the methacrylic resins caused by ultraviolet light. An ultraviolet absorber is poorly compatible with methacrylic resins, and therefore an ultraviolet absorber kneaded in a great amount impairs transparency of the methacrylic resins. In addition, an ultraviolet absorber kneaded in methacrylic resins can adhere to rolls, dies or the like during melt shaping, resulting in mold smudging. Mold smudging impairs surface properties of the shaped product and, therefore, should be prevented by washing rolls or the like regularly, which results in a decrease in productivity. In the case of a thin shaped product containing an ultraviolet absorber kneaded therein, bleed-out of the ultraviolet absorber can impair the characteristics of the shaped product.

Patent Document 1 discloses a methacrylic resin composition comprising a methacrylic resin and a block copolymer. Patent Document 1 describes an amount of an additive such as an ultraviolet absorber to be added may be not more than 1% by mass.

Patent Document 2 discloses a composition comprising a polymethyl methacrylate resin and a graft copolymer having a polyethylene main chain and a polystyrene side chain.

Patent Document 3 discloses a thermoplastic resin composition comprising a thermoplastic resin and a graft copolymer having a multilayer structure composed of a polycarbonate resin segment and a polyvinyl resin segment, a disperse phase made of one of the segments is finely dispersed in a continuous phase made of another of the segments.

CITATION LIST

PATENT LITERATURES

Patent Document 1: WO 2014/073216 A

Patent Document 2: JP 2015-021047 A

Patent Document 3: JP H08-333516 A

SUMMARY OF THE INVENTION

PROBLEMS TO BE SOLVED BY THE INVENTION

An object of the present invention is to provide a methacrylic resin composition that can be subjectd to a melt-shaping while mold smudging and the like are prevented, and that is suitable for use to produce a shaped product being hard to cause a bleed-out of an ultraviolet absorber.

MEANS FOR SOLVING THE PROBLEMS

Research conducted to achieve the object results in completing the present invention having the following embodiments.

[1] A methacrylic resin composition comprising 75 to 99.8% by mass of a methacrylic resin [A]; 0.1 to 15% by mass of an ultraviolet absorber [B]; and 0.1 to 10% by mass of a compound [C] being a block copolymer or a graft copolymer, the block copolymer or the graft copolymer having a weight average molecular weight of 32 thousand to 300 thousand.

[2] The methacrylic resin composition according to [1], wherein the methacrylic resin [A] comprises not less than 90% by mass of a structural unit derived from methyl methacrylate.

[3] The methacrylic resin composition according to [1] or [2], wherein the methacrylic resin [A] has a triad syndiotacticity (rr) of not less than 58%.

[4] The methacrylic resin composition according to [1] or [2], wherein the methacrylic resin [A] comprises a structural unit derived from methyl methacrylate and a structural unit having a ring structure in a main chain.

[5] The methacrylic resin composition according to [4], wherein the structural unit having a ring structure in a main chain is a structural unit having a >CH-O-C (=O) - group in the ring structure, a structural unit having a -C(=O)-O-C(=O)- group in the ring structure, a structural unit having a -C(=O)-N-C(=O)- group in the ring structure, or a structural unit having a >CH-O-CH< group in the ring structure.

[6] The methacrylic resin composition according to any one of [1] to [5], wherein a weight average molecular weight of the methacrylic resin [A] is 50 thousand to 200 thousand.

[7] The methacrylic resin composition according to any one of [1] to [6], wherein the ultraviolet absorber [B] is a compound having a benzotriazole skeleton or a compound having a triazine skeleton.

[8] The methacrylic resin composition according to any one of [1] to [7], wherein

the compound [C] is a block copolymer, and

the block copolymer comprises at least one polymer block composed of a polymer comprising not less than 90% by mass of a structural unit derived from methyl methacrylate, a polymer comprising a structural unit derived from styrene and a structural unit derived from acrylonitrile, a polymer comprising a structural unit derived from styrene and a structural unit derived from maleic anhydride, a polymer comprising a structural unit derived from styrene, a structural unit derived from maleic anhydride and a structural unit derived from methyl methacrylate, or a polyvinyl butyral.

[9] The methacrylic resin composition according to any one of [1] to [7], wherein

the compound [C] is a block copolymer, and the block copolymer comprises 10 to 80% by mass of a polymer block [c1] comprising mainly a structural unit derived from a methacrylic acid ester and 20 to 90% by mass of a polymer block [c2] comprising mainly a structural unit derived from an acrylic acid ester, wherein a total amount of the polymer block [c1] and the polymer block [c2] is 100% by mass.

[10] The methacrylic resin composition according to any one of [1] to [9], wherein the block copolymer is a diblock copolymer.

[11] The methacrylic resin composition according to any one of [1] to [7], wherein

the compound [C] is a graft copolymer, and the graft copolymer comprises a main chain and a graft side chain, the main chain or at least one of the graft side chain composed of a polymer comprising not less than 90% of a structural unit derived from methyl methacrylate, a polymer comprising a structural unit derived from styrene and a structural unit derived from acrylonitrile, a polymer comprising a structural unit derived from styrene and a structural unit derived from maleic anhydride, a polymer comprising a structural unit derived from styrene, a structural unit derived from maleic anhydride and a structural unit derived from methyl methacrylate, or a polyvinyl butyral.

[12] The methacrylic resin composition according to any one of [1] to [7], wherein

the compound [C] is a graft copolymer, and the graft copolymer comprises a main chain composed of a polycarbonate and a graft side chain composed of a polymer comprising mainly a structural unit derived from an aromatic vinyl, a polymer comprising a structural unit derived from an aromatic vinyl and a structural unit derived from acrylonitrile, a polymer comprising mainly a structural unit derived from a (meth)acrylic acid ester, or a polymer comprising a structural unit derived from an aromatic vinyl, a structural unit derived from acrylonitrile and a structural unit derived from a (meth)acrylic acid ester.

[13] The methacrylic resin composition according to any one of [1] to [7], wherein

the compound [C] is a graft copolymer,

the graft copolymer comprises a main chain composed of a polyolefin, and a graft side chain composed of a polymer comprising mainly a structural unit derived from an aromatic vinyl, a polymer comprising a structural unit derived from an aromatic vinyl and a structural unit derived from acrylonitrile, a polymer comprising mainly a structural unit derived from a (meth)acrylic acid ester, or a polymer comprising a structural unit derived from an aromatic vinyl, a structural unit derived from acrylonitrile and a structural unit derived from a (meth)acrylic acid ester.

[14] A shaped product comprising the methacrylic resin composition according to any one of [1] to [13].

[15] A film comprising the methacrylic resin composition according to any one of [1] to [13].

[16] The film according to [15] having a thickness of 10 to 50 $\mu$m.

[17] The film according to [15] or [16], being an uniaxially stretched film or a biaxially stretched film having a draw ratio by area of 1.5 to 8.

[18] An optical film comprising the film according to any one of [15] to [17].

[19] A protective film for a polarizer, comprising the film according to any one of [15] to [17].

[20] A retardation film comprising the film according to any one of [15] to [17].

[21] A polarizing plate comprising at least one of the film according to any one of [18] to [20].
[22] A method for producing a shaped product, comprising:

melt-kneading 75 to 99.8% by mass of a methacrylic resin [A], 0.1 to 15% by mass of an ultraviolet absorber [B], and 0.1 to 10% by mass of a compound [C] being a block copolymer or a graft copolymer to obtain a methacrylic resin composition, the block copolymer or the graft copolymer having a weight average molecular weight of 32 thousand to 300 thousand; and
subjecting the methacrylic resin composition to a melt shaping.

ADVANTAGEOUS EFFECTS OF THE INVENTION

The methacrylic resin composition of the present invention can be subjected to a melt-shaping while mold smudging and the like are prevented. Whatever a thin shaped product is formed of the methacrylic resin composition of the present invention, the shaped product is hard to cause bleed-out of an ultraviolet absorber and other additives. In addition, the shaped product is excellent in weather resistance, light resistance and the like.
The methacrylic resin composition of the present invention, comprising a methacrylic resin having a high stereoregularity or a methacrylic resin comprising a structural unit having a ring structure in a main chain, has an excellent heat resistance in addition to the features described above.
A shaped product comprising the methacrylic resin composition of the present invention is suitable for use in optical components such as a polarizer protective film, a retardation plate, a light dispersing plate, a light guide plate and the like.

BRIEF DESCRIPTION OF THE DRAWINGS

Fig. 1 is an illustration of a polarizing plate according to a preferable embodiment of the present invention.
Fig. 2 is an illustration of a polarizing plate according to another preferable embodiment of the present invention.

EMBODIMENT FOR CARRYING OUT THE INVENTION

The methacrylic resin composition of the present invention comprises a methacrylic resin [A], an ultraviolet absorber [B], and a compound [C].

[Methacrylic resin [A]

The methacrylic resin [A] is a polymer comprising only a structural unit derived from methyl methacrylate (hereinafter, this homo-polymer is sometimes called methacrylic resin [A0]), or a random copolymer comprising a structural unit derived from methyl methacrylate and a structural unit derived from another monomer (hereinafter, this random copolymer is sometimes called methacrylic resin [A1]). As the methacrylic resin [A], a commercially available methacrylic resin may be used.
From the viewpoint of heat resistance, the total content of the structural unit derived from methyl methacrylate in the methacrylic resin [A1] used in the present invention is preferably not less than 90% by mass, more preferably not less than 95% by mass, further preferably not less than 98% by mass, further preferably not less than 99% by mass.
The methacrylic resin [A1] may comprise a structural unit derived from another monomer in addition to methyl methacrylate. Examples of the other monomer than methyl methacrylate include vinyl monomers having a single polymerizable carbon-carbon double bond per molecule, for example, methacrylic acid alkyl esters not involving methyl methacrylate, such as ethyl methacrylate, butyl methacrylate and the like; methacrylic acid aryl esters such as phenyl methacrylate and the like; methacrylic acid cycloalkyl esters such as cyclohexyl methacrylate, norbornenyl methacrylate and the like; acrylic acid alkyl esters such as methyl acrylate, ethyl acrylate, propyl acrylate, butyl acrylate, 2-ethylhexyl acrylate and the like; acrylic acid aryl esters such as phenyl acrylate and the like; acrylic acid cycloalkyl esters such as cyclohexyl acrylate, norbornenyl acrylate and the like; aromatic vinyl compounds such as styrene, $\alpha$-methylstyrene and the like; acrylamide; methacrylamide; acrylonitrile; methacrylonitrile; and the like.
As for a triad syndiotacticity (rr) of the methacrylic resin [A0] or the methacrylic resin [A1], the lower limit is preferably 58%, more preferably 59%, further preferably 60%, and the upper limit is not particularly limited but is preferably 99%, more preferably 85%, further preferably 77%, even further preferably 65%, most preferably 64% from the viewpoint of film-forming properties.
The triad syndiotacticity (rr) (hereinafter, sometimes simply called "syndiotacticity (rr)") refers to a proportion

of that three adjacent structural units (triad) involve two sets of diads that are both racemo diads (expressed as rr). Here, in a polymer molecule, a pair of adjacent structural units (diad) having an identical configuration is called a meso diad, and a pair of adjacent structural units (diad) having an oppositional configuration is called a racemo diad, respectively expressed as m or r.

The triad syndiotacticity (rr) (%) can be calculated by a formula: (X/Y) $\times$ 100 from a $^1$H-NMR spectrum in deuterated chloroform at 30 °C, wherein X is an area of region between 0.6 ppm and 0.95 ppm and Y is an area of region between 0.6 ppm and 1.35 ppm, with the spectrum of TMS being taken as 0 ppm.

The weight average molecular weight of the methacrylic resin [A0] or the methacrylic resin [A1], $Mw_{A1}$, in terms of polystyrene is preferably from 50 thousand to 200 thousand, more preferably from 55 thousand to 160 thousand, further preferably from 60 thousand to 120 thousand. The weight average molecular weight is determined based on a chromatogram obtained by gel permeation chromatography. As the $Mw_{A1}$ value increases, a shaped product composed of the methacrylic resin [A0] or the methacrylic resin [A1] tends to be high in strength. As the $Mw_{A1}$ value decreases, the forming processability of the methacrylic resin [A0] or the methacrylic resin [A1] tends to be excellent and the surface smoothness of the resulting shaped product tend to be excellent.

The methacrylic resin [A0] or the methacrylic resin [A1] has a ratio ($Mw_{A1}/Mn_{A1}$) of the weight average molecular weight ($Mw_{A1}$) to the number average molecular weight ($Mn_{A1}$) in terms of polystyrene based on a chromatogram obtained by gel permeation chromatography of preferably not less than 1.0 and not more than 5.0, preferably not less than 1.2 and not more than 2.5, further preferably not less than 1.3 and not more than 1.7. As the $Mw_{A1}/Mn_{A1}$ ratio decreases, impact resistance and toughness tend to be excellent. As the $Mw_{A1}/Mn_{A1}$ ration increases, melt fluidity of the methacrylic resin [A0] or the methacrylic resin [A1] tends to be excellent and surface smoothness of the the resulting shaped product tend to be excellent.

In the methacrylic resin [A0] or the methacrylic resin [A1] used in the present invention, a proportion of a component having a molecular weight of not less than 200000 (high-molecular-weight component)is preferably 0.1 to 10%, more preferably 0.5 to 5%, and a proportion of a component having a molecular weight of less than 15000 (low-molecular-weight component) is preferably 0.1 to 5%, more preferably 0.2 to 3%. When the methacrylic resin [A0] or the methacrylic resin [A1] contains the high-molecular-weight component and the low-molecular-weight component each in an amount within the above ranges, film-forming properties are improved and thereby it is easy to produce a film having a uniform thickness.

The proportion of a component having a molecular weight of not less than 200000 is represented by a ratio of a square measure of a region surrounded by the GPC chromatogram and the base line before the retention time of standard polystyrene having a molecular weight of 200000 to a square measure of a region surrounded by the GPC chromatogram and the base line in entire measuring range. The proportion of a component having a molecular weight of less than 15000 is represented by a ration of a square measure of a region surrounded by the GPC chromatogram and the base line after the retention time of standard polystyrene having a molecular weight of 15000 to a square measure of a region surrounded by the GPC chromatogram and the base line in entire measuring range.

Gel permeation chromatography is performed as follows. Tetrahydrofuran is used as an eluent. Two TSKgel SuperMultipore HZM-M columns and a SuperHZ4000 column which are manufactured by Tosoh Corporation are connected in series. For analyzer, employed is an HLC-8320 (product number) manufactured by Tosoh Corporation equipped with a differential refractometer detector (RI detector). In 5 ml of tetrahydrofuran, 4 mg of a methacrylic resin is dissolved to obtain a solution to be measured. A temperature of a column oven is set at 40°C, a flow rate of the eluent is set at 0.35 ml/min. and then 20 $\mu$l of the measuring solution is injected to obtain a chromatogram. The chromatogram is a chart plotting an electric signal value (intensity, Y) attributed to difference between refractive index of the measuring solution and refractive index of a reference solution corresponding to the retention time, X.

A standard polystyrene having a molecular weight ranging from 400 to 5000000 was subjected to measurement by gel permeation chromatography and a calibration curve showing the relationship between the retention time and the molecular weight was produced. The base line was drawn by connecting a point at which inclination on the side of high molecular weight of a peak in the chromatogram changes from zero to plus value and a point at which inclination on the side of low molecular weight of the peak in the chromatogram changes from minus value to zero. When the chromatogram had a plurality of peaks, the base line was drawn by connecting a point at which inclination of a peak attributed to the highest molecular weight changes from zero to plus value and a point at which inclination of a peak attributed to the lowest molecular weight changes from minus value to zero.

The methacrylic resin [A0] or the methacrylic resin [A1] has a melt flow rate of preferably 0.1 to 30 g/10min., more preferably 0.5 to 20 g/10min., and further preferably 1 to 15 g/10min. under conditions of 230°C and 3.8 kg load.

The methacrylic resin [A0] or the methacrylic resin [A1] has a glass transition temperature of preferably not less than 100°C, more preferably not less than 110°C, further preferably not less than 120°C, and particularly preferably not less than 123°C. The upper limit to the glass transition temperature of the methacrylic resin [A0] or the methacrylic resin [A1] is not particularly limited but is preferably 131°C.

The glass transition temperature is the midpoint glass transition temperature determined from a DSC curve.

The DSC curve is obtained with a differential scanning calorimeter according to JIS K7121 as below. A resin to be measured is warmed up to 230°C, cooled to room temperature, and then warmed again from room temperature to 230°C at 10°C/min. During the second warming, differential scanning calorimetry is performed to obtain the DSC curve.

The methacrylic resin [A] used in the present invention may be a random copolymer comprising a structural unit derived from methyl methacrylate and a structural unit having a ring structure in a main chain (hereinafter, this random copolymer is sometimes called methacrylic resin [A2]). Comprising the structural unit having a ring structure in a main chain improves heat resistance of the methacrylic resin composition. Therefore, the total content of the structural unit derived from methyl methacrylate in the methacrylic resin [A2] comprising a structural unit derived from methyl methacrylate and a structural unit having a ring structure in a main chain may be less than the range described above. For example, in the methacrylic resin [A2] comprising a structural unit derived from methyl methacrylate and a structural unit having a ring structure in a main chain, the total content of the structural unit derived from methyl methacrylate is preferably 20 to 99% by mass, more preferably 30 to 95% by mass, further preferably 40 to 90% by mass and the total content of the structural unit having a ring structure in a main chain is preferably 1 to 80% by mass, more preferably 5 to 70% by mass, further preferably 10 to 60% by mass. The methacrylic resin [A2] comprising a structural unit derived from methyl methacrylate and a structural unit having a ring structure in a main chain may also comprise an additional structural unit other than the structural unit derived from methyl methacrylate and the structural unit having a ring structure in a main chain. This additional structural unit may be a structural unit derived from one of the monomers described above as the monomer other than methyl methacrylate.

As the structural unit having a ring structure in a main chain, preferred is a structural unit having a >CH-O-C(=O)- group in the ring structure, a structural unit having a -C(=O)-O-C(=O)- group in the ring structure, a structural unit having a -C(=O)-N-C(=O)-group in the ring structure, or a structural unit having a >CH-O-CH< group in the ring structure.

The structural unit having a ring structure in a main chain can be introduced into the methacrylic resin by a copolymerization of a cyclic monomer having a polymerizable unsaturated carbon-carbon double bond such as maleic anhydride, an N-substituted maleimide or the like with methyl methacrylate or the like; or an intramolecular cyclocondensation of a portion of a molecular chain of the methacrylic resin.

As the structural unit having a >CH-O-C(=O)- group in the ring structure, mentioned can be lactonediyl structural units such as a β-propiolactonediyl (alias: oxooxetanediyl) structural unit, a γ-butyrolactonediyl (alias: 2-oxodihydrofurandiyl) structural unit, a δ-valerolactonediyl (alias: 2-oxodihydropyranediyl) structural unit, and the like. The symbol ">C" in the formula means that there are two bonding sites for the carbon atom, C.

As the δ-valerolactonediyl structural unit, for example, mentioned can be a structural unit represented by Formula (Ib). The δ-valerolactonediyl structural unit is preferably a structural unit represented by Formula (Ic).

[Chemical 1]

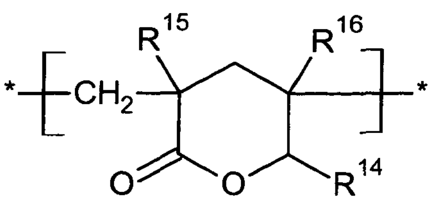

(Ib)

In Formula (Ib), $R^{14}$ and $R^{15}$ are each independently a hydrogen atom or a $C_{1-20}$ organic residue; $R^{16}$ is -COOR, and R is a hydrogen atom or a $C_{1-20}$ organic residue. * indicates a bonding site.

Examples of the organic residue in Formula (Ib) can include a linear or branched alkyl group, a linear or branched alkylene group, an aryl group, a -OAc group, a -CN group, and the like. The organic residue may contain an oxygen atom. The symbol "Ac" means an acetyl group. The organic residue preferably contains 1 to 10 carbon atoms, more preferably 1 to 5 carbon atoms.

[Chemical 2]

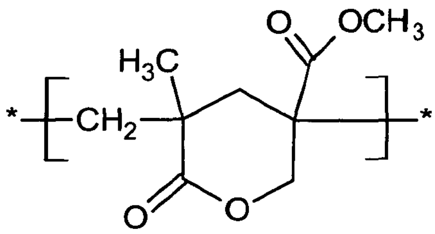

(Ic)

The δ-valerolactonediyl structural unit can be introduced into the methacrylic resin by, for example, intramolecular cyclization of two adjacent structural units both derived from methyl methacrylate or the like.

Examples of the structural unit having a -C(=O)-O-C(=O)- group in the ring structure can include a 2,5-dioxodihydrofurandiyl structural unit, a 2,6-dioxodihydropyranediyl structural unit, a 2,7-dioxooxepanediyl structural unit, and the like.

As the 2,5-dioxodihydrofurandiyl structural unit, for example, mentioned can be a structural unit represented by Formula (IIa). The 2,5-dioxodihydrofurandiyl structural unit is preferably a structural unit represented by Formula (IIb).

[Chemical 3]

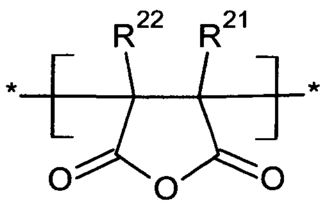

(IIa)

In Formula (IIa), $R^{21}$ and $R^{22}$ are each independently a hydrogen atom or a $C_{1-20}$ organic residue. * indicates a bonding site.

Examples of the organic residue in Formula (IIa) can include a linear or branched alkyl group, a linear or branched alkylene group, an aryl group, a -OAc group, a -CN group, and the like. The organic residue may contain an oxygen atom. The symbol "Ac" means an acetyl group. The organic residue preferably contains 1 to 10 carbon atoms, more preferably 1 to 5 carbon atoms.

When both of $R^{21}$ and $R^{22}$ are a hydrogen atom, usually, styrene or the like is preferably copolymerized from the viewpoints of ease of manufacturing, adjustment of intrinsic birefringence, and the like. For example, mentioned can be a copolymer comprising a structural unit derived from styrene, a structural unit derived from methyl methacrylate, and a structural unit derived from maleic anhydride as described in WO 2014/021264 A.

[Chemical 4]

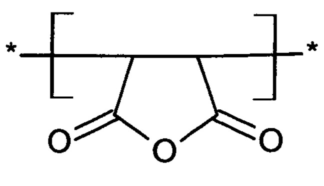

(IIb)

The 2,5-dioxodihydrofurandiyl structural unit can be introduced into the methacrylic resin by, for example, copolymerization of maleic anhydride or the like. * indicates a bonding site.

Examples of the 2,6-dioxodihydropyranediyl structural unit can include a structural unit represented by Formula (IIIa), and a structural unit represented by Formula (IIIb). The 2,6-dioxodihydropyranediyl structural unit is preferably a structural unit represented by Formula (IIIc).

[Chemical 5]

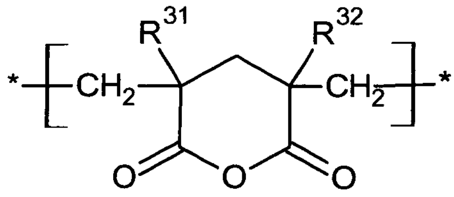

(IIIa)

In Formula (IIIa), $R^{31}$ and $R^{32}$ are each independently a hydrogen atom or a $C_{1-20}$ organic residue.

* indicates a bonding site.

[Chemical 6]

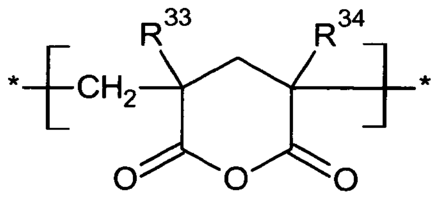

(IIIb)

In Formula (IIIb), $R^{33}$ and $R^{34}$ are each independently a hydrogen atom or a $C_{1-20}$ organic residue.

* indicates a bonding site.

Examples of the organic residue in Formula (IIIa) and (IIIb) can include a linear or branched alkyl group, a linear or branched alkylene group, an aryl group, a -OAc group, a -CN group, and the like. The organic residue may contain an oxygen atom. The symbol "Ac" means an acetyl group. The organic residue preferably contains 1 to 10 carbon atoms, more preferably 1 to 5 carbon atoms.

[Chemical 7]

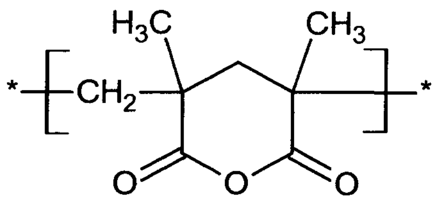

(IIIc)

The 2,6-dioxodihydropyranediyl structural unit can be introduced into the methacrylic resin by, for example, intramolecular cyclization of two adjacent structural units both derived from methyl methacrylate.

Examples of the structural unit having a -C(=O)-N-C(=O)- group in the ring structure (the N atom should have one more bonding site which is omitted in the formula) can include a 2,5-dioxopyrrolidinediyl structural unit, a 2,6-dioxopiperidinediyl structural unit, a 2,7-dioxoazepanediyl structural unit, and the like.

As the 2,6-dioxopiperidinediyl structural unit, for example, mentioned can be a structural unit represented by Formula (IVa). The 2,6-dioxopiperidinediyl structural unit is preferably a structural unit represented by Formula (IVb).

[Chemical 8]

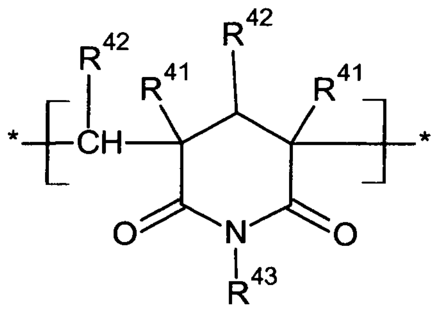

(IVa)

In Formula (IVa), $R^{41}$ and $R^{42}$ are each independently a hydrogen atom or a $C_{1-8}$ alkyl group; and $R^{43}$ is a hydrogen atom, a $C_{1-18}$ alkyl group, a $C_{3-12}$ cycloalkyl group, or a $C_{6-10}$ aryl group. * indicates a bonding site.

From the viewpoint of accessibility of raw materials, cost, heat resistance and the like, $R^{41}$ and $R^{42}$ are preferably each independently a hydrogen atom or a methyl group, and $R^{43}$ is preferably a hydrogen atom, a methyl group, an n-butyl group, a cyclohexyl group, or a benzyl group.

[Chemical 9]

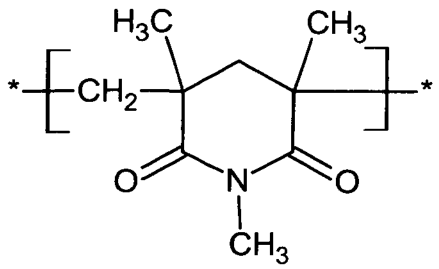

(IVb)

Examples of the 2,5-dioxopyrrolidinediyl structural unit can include a structural unit represented by Formula (Va). The 2,6-dioxopiperidinediyl structural unit is preferably a structural unit represented by Formula (Vb) or a structural unit represented by Formula (Vc).

[Chemical 10]

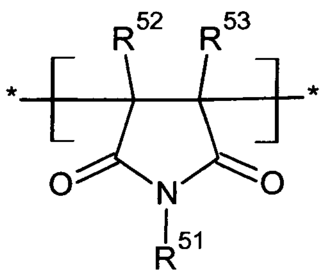

(Va)

In Formula (Va), $R^{52}$ and $R^{53}$ are each independently a hydrogen atom, a $C_{1-12}$ alkyl group, or a $C_{6-14}$ alkyl group; and $R^{51}$ is a $C_{7-14}$ arylalkyl group, or an unsubstituted or substituted $C_{6-14}$ aryl group. The substituent group in the aryl group is a halogeno group, a hydroxy group, a nitro group, a $C_{1-12}$ alkoxy group, a $C_{1-12}$ alkyl group, or a $C_{7-14}$ arylalkyl group. * indicates a bonding site.

[Chemical 11]

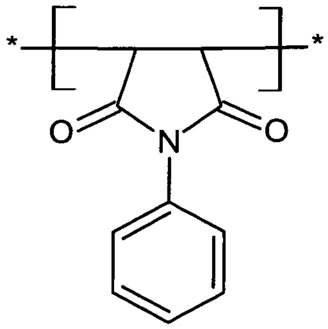

(Vb)

[Chemical 12]

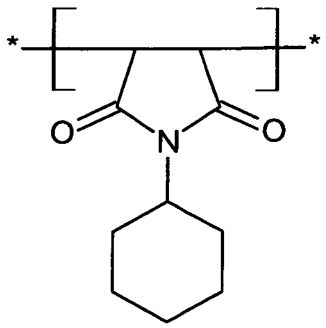

(Vc)

The 2,5-dioxopyrrolidinediyl structural unit can be introduced into the methacrylic resin by, for example, copolymerization of N-substituted maleimide or the like.

Examples of the structural unit having a >CH-O-CH< group in the ring structure can include an oxetanediyl structural unit, a tetrahydrofurandiyl structural unit, a tetrahydropyranediyl structural unit, an oxepanediyl structural unit, and the like. The symbol ">C" in the formula means that there are two bonding sites for the carbon atom, C.

Examples of the tetrahydropyranediyl structural unit can include a structural unit represented by Formula (VIa).

[Chemical 13]

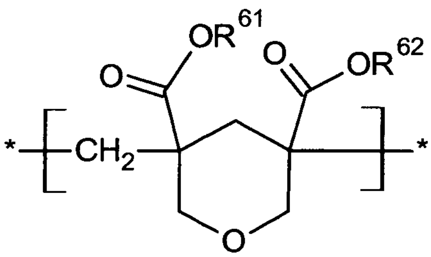

(VIa)

In Formula (VIa), $R^{61}$ and $R^{62}$ are each independently a hydrogen atom, a linear or branched $C_{1-20}$ hydrocarbon group, or a $C_{3-20}$ hydrocarbon group having a ring structure. * indicates a bonding site.

It is preferable that $R^{61}$ and $R^{62}$ are each independently a tricyclo[5.2.1.0$^{2,6}$]decanyl group (Formula (VI-1)), a 1,7,7-trimethylbicyclo[2.2.1]heptan-3-yl group (Formula (VI-2)), a t-butyl group (Formula (VI-3)), or a 4-t-butylcyclohexanyl group (Formula (VI-4)). In Formulae (VI-1) to (VI-4), the symbol "+" indicates a position of bonding.

[Chemical 14]

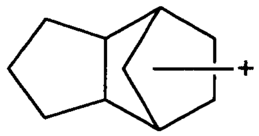

(VI-1)

[Chemical 15]

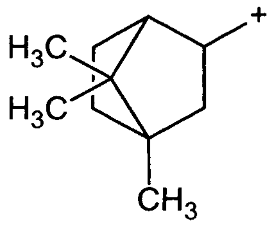

(VI-2)

[Chemical 16]

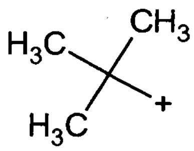

(VI-3)

[Chemical 17]

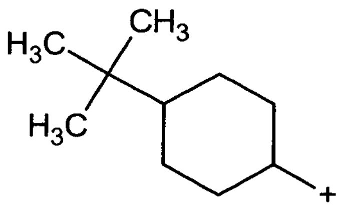

(VI-4)

Among these examples of the structural unit having a ring structure in a main chain, the δ-valerolactonediyl structural unit or the 2,5-dioxodihydrofurandiyl structural unit is preferable from the viewpoints of ready availability of raw materials and ease of manufacturing.

The weight average molecular weight of the methacrylic resin [A2], $Mw_{A2}$, in terms of polystyrene is preferably 50 thousand to 200 thousand, more preferably 55 thousand to 160 thousand, further preferably 60 thousand to 120 thousand. The weight average molecular weight is determined based on a chromatogram obtained by gel permeation chromatography. As the $Mw_{A2}$ value increases, a shaped product composed of the methacrylic resin [A2] tends to be strong. As the $Mw_{A2}$ value decreases, the forming processability of the methacrylic resin [A2] tends to be excellent and the surface smoothness of the resulting shaped product tend to be excellent.

The methacrylic resin [A2] has a ratio ($Mw_{A2}/Mn_{A2}$) of the weight average molecular weight ($Mw_{A2}$) to the number average molecular weight ($Mn_{A2}$) in terms of polystyrene determined based on a chromatogram obtained by gel permeation chromatography of preferably not less than 1.0 and not more than 5.0, preferably not less than 1.2 and not more than 3.0. As the $Mw_{A2}/Mn_{A2}$ value decreases, impact resistance and toughness tend to be excellent. As the $Mw_{A2}/Mn_{A2}$ value increases, the melt fluidity of the methacrylic resin [A2] tends to be excellent and the surface smoothness of the resulting shaped product tend to be excellent.

The methacrylic resin [A2] has a melt flow rate preferably 0.1 to 20 g/10min., more preferably 0.5 to 15 g/10min., further preferably 1 to 10 g/10min. as measured under conditions of 230°C and 3.8 kg load.

The methacrylic resin [A2] has a glass transition temperature of preferably not less than 110°C, more preferably not less than 120°C, and further preferably not less than 125°C, particularly preferably not less than 130°C. The upper limit to the glass transition temperature of the methacrylic resin [A2] is not particularly limited but is preferably 140°C.

Imparting the properties described above to the methacrylic resin [A] used in the present invention may be performed by using one methacrylic resin or by using a mixture of at least two methacrylic resins.

The one methacrylic resin or at least two methacrylic resins constituting the methacrylic resin [A] used in the

present invention may be produced by any method. For example, the methacrylic resin may be obtained by polymerization of methyl methacrylate or polymerization of methyl methacrylate and another monomer. The polymerization may be performed by a known method. Examples of the method of polymerization can include radical polymerization, anionic polymerization, and the like according to a classification based on a mode of a chain transferring. Moreover, according to the classification based on the state of the reacting solution, mentioned can be bulk polymerization, solution polymerization, suspension polymerization, emulsion polymerization, and the like. The above-described properties of the methacrylic resin [A] can be attained by appropriately selecting polymerization conditions such as polymerization temperature, polymerization time, type and amount of a chain transfer agent and timing to add the chain transfer agent, and type and amount of a polymerization initiator and timing to add the polymerization initiator. Controlling the properties by selecting the polymerization conditions in this way is known to one skilled in the art, and it is not difficult for one skilled in the art to produce a resin having desired properties. By performing polymerization in this way and then subjecting the resulting resin to intramolecular cyclization in a way described above, the methacrylic resin [A2] may be obtained.

The ultraviolet absorber [B] used in the present invention is a known ultraviolet absorber that may be added to a thermoplastic resin. When the molecular weight of the ultraviolet absorber [B] is not more than 200, bubble formation and other phenomena may occur during shaping of the methacrylic resin composition. Thus, the molecular weight of the ultraviolet absorber [B] is preferably more than 200, more preferably not less than 300, further preferably not less than 500, even further preferably not less than 600.

The ultraviolet absorber is generally a compound capable of absorbing ultraviolet light, and is known to have a primary function of converting light energy into thermal energy.

Examples of the ultraviolet absorber can include benzophenones, benzotriazoles, triazines, benzoates, salicylates, cyanoacrylates, oxalic anilides, malonic acid esters, formamidines, and the like. The ultraviolet absorbers may be used alone or in combination of two or more. Preferable among these are benzotriazoles (a compound having a benzotriazole skeleton) or triazines (a compound having a triazine skeleton). Benzotriazoles or triazines are highly effective in inhibiting degradation (such as yellowing) of resin caused by ultraviolet light.

Examples of the benzotriazoles can include 2-(2H-benzotriazol-2-yl)-4-(1,1,3,3-tetramethylbutyl )phenol (manufactured by BASF, trade name: TINUVIN 329), 2-(2H-benzotriazol-2-yl)-4,6-bis(1-methyl-1-phenylet hyl)phenol (manufactured by BASF, trade name: TINUVIN 234), 2,2'-methylene bis[6-(2H-benzotriazol-2-yl)-4-tert-octylphenol] (manufactured by ADEKA CORPORATION, LA-31), 2-(5-octylthio-2H-benzotriazol-2-yl)-6-tert-butyl-4-methylphenol, and the like.

Examples of the triazines can include 2,4,6-tris (2 -hydroxy-4-hexyloxy-3-methylphenyl)-1,3,5-triazine (manufactured by ADEKA CORPORATION, LA-F70) and triazine analogs such as hydroxyphenyltriazine ultraviolet absorbers (manufactured by BASF, such as CGL 777, TINUVIN 460, and TINUVIN 479), 2,4-diphenyl -6-(2-hydroxy-4-hexyloxyphenyl)-1,3,5-triazine, and the like.

Other than these, it is preferable to use ultraviolet absorbers having a maximum molar absorption coefficient, $\varepsilon_{max}$, at a wavelength of 380 to 450 nm of not more than 1200 $dm^3mol^{-1}cm^{-1}$. Examples of such ultraviolet absorbers can include 2-ethyl-2'-ethoxy-oxalanilide (manufactured by Clariant Japan K.K., trade name: Sanduvor VSU) and the like.

As the ultraviolet absorber [B], a metal complex that has a ligand having a heterocyclic structure disclosed in WO 2011/089794 A1, WO 2012/124395 A1, JP 2012-012476 A, JP 2013-023461 A, JP 2013-112790 A, JP 2013-194037 A, JP 2014-62228 A, JP 2014-88542 A, JP 2014-88543 A, or the like (for example, a compound having a structure represented by Formula (8)) may also be used.

[Chemical 18]

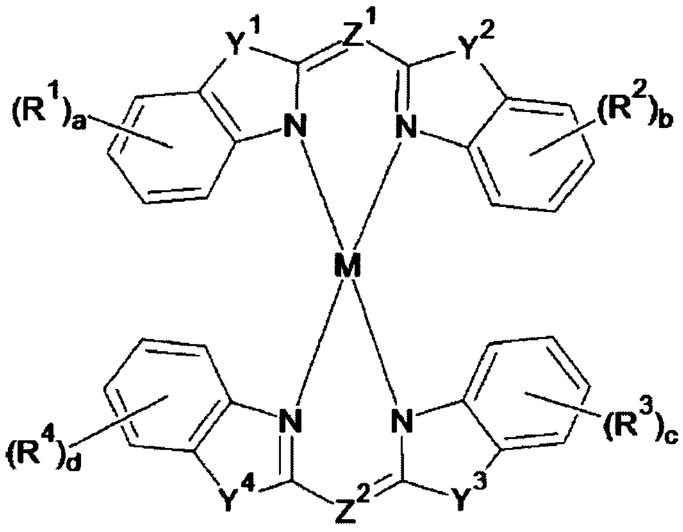

(8)

[In Formula (8), M is a metal atom;

$Y^1$, $Y^2$, $Y^3$, and $Y^4$ are each independently a divalent group other than a carbon atom (the divalent group is an oxygen atom, a sulfur atom, NH, or $NR^5$, for example) ; $R^5$ is each independently a substituent such as an alkyl group, an aryl group, a heteroaryl group, a heteroaralkyl group, or an aralkyl group; the substituent may have an additional substituent attached thereto;

$Z^1$ and $Z^2$ are each independently a trivalent group (the trivalent group is a nitrogen atom, CH, or $CR^6$, for example); $R^6$ is each independently a substituent such as an alkyl group, an aryl group, a heteroaryl group, a heteroaralkyl group, or an aralkyl group; the substituent may have an additional substituent attached thereto;

$R^1$, $R^2$, $R^3$, and $R^4$ are each independently a hydrogen atom, a substituent such as an alkyl group, a hydroxy group, a carboxyl group, an alkoxyl group, a halogeno group, an alkylsulfonyl group, a morpholinosulfonyl group, a piperidinosulfonyl group, a thiomorpholinosulfonyl group, or a piperazinosulfonyl group; the substituent may have an additional substituent attached thereto; and each of a, b, c, and d indicates the number of $R^1$, $R^2$, $R^3$, or $R^4$, respectively, and is any of an integer of 1 to 4.]

Examples of the ligand having the heterocyclic structure can include 2,2'-iminobisbenzothiazole, 2-(2-benzothiazolylamino)benzoxazole, 2-(2-benzothiazolylamino)benzimidazole, (2-benzothiazolyl)(2-benzoimidazolyl)methane, bis(2-benzoxazolyl)methane, bis(2-benzothiazolyl)methane, bis[2-(N-substituted)benzoimidazolyl]methane, and the like, derivatives thereof, and the like. As a central metal of the metal complex, copper, nickel, cobalt, or zinc is preferably used. For using the metal complex as the ultraviolet absorber, the metal complex is preferably dispersed in a medium such as a low-molecular compound or a polymer. The amount of the metal complex is preferably 0.01 part by mass to 5 parts by mass, more preferably 0.1 to 2 parts by mass, relative to 100 parts by mass of the resin composition of the present invention. The metal complex having a high molar absorption coefficient at a wavelength from 380 nm to 400 nm can be added in a small amount for adequate ultraviolet absorption. As the additive amount is small, deterioration in the appearance of a shaped product caused by bleed out or the like can be inhibited. The metal complex also has excellent heat resistance and therefore is less likely to deteriorate or decompose during a forming process. Furthermore, with its high light resistance, the metal complex can maintain its ultraviolet absorbing performance for an extended period of time.

The maximum molar absorption coefficient, $\varepsilon_{max}$, of the ultraviolet absorber is determined as follows. To 1 L of cyclohexane, 10.00 mg of the ultraviolet absorber is added and dissolved until no undissolved matter is visually observed. The resulting solution is poured into a quartz glass cell of 1 cm × 1 cm × 3 cm and the absorbance at a wavelength of 380 to 450 nm is measured with U-3410 spectrophotometer manufactured by Hitachi, Ltd. Using the molecular weight (Muv) of the ultraviolet absorber and the maximum absorbance ($A_{max}$) thus measured, the maximum molar absorption coefficient, $\varepsilon_{max}$, is calculated by the following formula.

$$\varepsilon_{max} = [A_{max}/(10 \times 10^{-3})] \times M_{UV}$$

The compound [C] used in the present invention is a block copolymer or a graft copolymer.

The block copolymer is, for example, composed of a molecular chain of a polymer A (the molecular chain is sometimes called polymer block A) and a molecular chain of a polymer B (the molecular chain is sometimes called polymer block B) bonded to each other at ends thereof into a chain form or a radial form.

The polymer blocks constituting the block copolymer are not particularly limited. For example, a block copolymer composed of a polymer block such as polymethyl methacrylate and a polymer block such as a polyacrylic acid ester may have excellent compatibility with a methacrylic resin and a low-molecular aromatic compound, for example.

The block copolymer can be produced by, for example, a method [i] in which a polymerization initiation site is formed at an end of the polymer block A, and then polymerization of monomers is started from the initiation site so as to produce the polymer block B using a living polymerization; and a method [ii] in which the polymer block A and the polymer block B are separately prepared and then these are subjected to addition or condensation reaction.

The graft copolymer is a branched copolymer in which, for example, an end of a molecular chain of the polymer B (the molecular chain is sometimes called graft side chain) is bonded to somewhere in the middle of a molecular chain of the polymer A (the molecular chain is sometimes called polymer main chain).

The main chain and the graft side chain constituting the graft copolymer are not particularly limited. For example, a graft copolymer composed of a main chain comprised of a polyolefin, a polycarbonate, an acrylic copolymer or the like and a graft side chain comprised of a polystyrene, a styrene-acrylonitrile copolymer, an acrylic copolymer or the like may have excellent compatibility with a methacrylic resin and a low-molecular aromatic compound, for example.

The graft copolymer can be produced by, for example, a chain transfer method [i] in which monomers for forming the polymer B are polymerized in the presence of the polymer A; a method [ii] in which a polymerizable group is introduced to an end of the polymer B to be a graft side chain and then the resulting polymer compound is subjected to copolymerization with monomers for forming the polymer A; and a method [iii] in which the polymer A to be a main chain and the polymer B to be a graft side chain are separately prepared and then these are subjected to addition or condensation reaction.

A weight average molecular weight of the block copolymer or the graft copolymer used as the compound [C] in the present invention is 32 thousand to 300 thousand, preferably 45 thousand to 300 thousand, more preferably 50 thousand to 230 thousand. The weight average molecular weight is determined by gel permeation chromatography and the value is expressed in terms of standard polystyrene.

In a block copolymer [C-B1] preferably used as the compound [C] in the present invention, at least one polymer block [c] constituting the block copolymer [C-B1] is composed of a polymer (PMMA) comprising not less than 90% by mass of a structural unit derived from methyl methacrylate, a polymer (AS polymer) comprising a structural unit derived from styrene and a structural unit derived from acrylonitrile, a polymer (SMA polymer) comprising a structural unit derived from styrene and a structural unit derived from maleic anhydride, a polymer (SMM polymer) comprising a structural unit derived from styrene, a structural unit derived from maleic anhydride and a structural unit derived from methyl methacrylate, or a polyvinyl butyral (PVB). The polymer block [c] has an excellent compatibility with a methacrylic resin. Polymer blocks constituting the block copolymer [C-B1] other than the polymer block [c] are not particularly limited. In the case in which the block copolymer [C-B1] is composed of at least two different polymer blocks [c], any polymer blocks other than the polymer blocks [c] are not necessarily required.

The PMMA as the polymer block [c] is a polymer comprising not less than 90% by mass of a structural unit derived from methyl methacrylate. The PMMA may comprise, in addition to methyl methacrylate, a (meth)acrylic acid ester other than methyl methacrylate introduced by copolymerization.

The AS polymer as the polymer block [c] is a polymer comprising a structural unit derived from styrene and a structural unit derived from acrylonitrile. As the proportion of the structural unit derived from acrylonitrile increases, tensile strength and a modulus of elasticity increase and oil resistance and chemical resistance tend to be improved.

The SMA polymer as the polymer block [c] is a polymer comprising a structural unit derived from styrene and a structural unit derived from maleic anhydride. The SMA polymer has properties such as a high glass-transition point, a high softening point, a high thermal stability, and a high melt viscosity.

The SMM polymer as the polymer block [c] is a polymer comprising a structural unit derived from styrene, a structural unit derived from maleic anhydride and a structural unit derived from methyl methacrylate. The SMM polymer is capable of enhancing heat resistance.

The PVB as the polymer block [c] is a polymer obtained by bonding butyl aldehyde to polyvinyl alcohol through condensation.

The block copolymer [C-B1] may have a functional group such as a hydroxyl group, a carboxyl group, an acid anhydride group, and an amino group in the molecular chain thereof or at an end of the molecular chain thereof, as needed.

A weight average molecular weight of the block copolymer [C-B1], $Mw_{C-B1}$, is 32 thousand to 300 thousand, preferably 40 thousand to 250 thousand, more preferably 45 thousand to 230 thousand, even further preferably 50 thousand to 200 thousand. The weight average molecular weight is determined by gel permeation chromatography and the value is expressed in terms of standard polystyrene. In the case in which the $Mw_{C-B1}$ value is within the range

described above, the amount of unmelted matter that causes blistering in a shaped product made of the methacrylic resin composition of the present invention can be made very low.

The block copolymer [C-B1] has a ratio ($Mw_{C-B1}Mn_{C-B1}$) of the weight average molecular weight ($Mw_{C-B1}$) to the number average molecular weight ($Mn_{C-B1}$) of preferably not less than 1.0 and not more than 2.0, more preferably not less than 1.0 and not more than 1.6. In the case in which the $Mw_{C-B1}/Mn_{C-B1}$ value is within the range described above, the amount of unmelted matter that causes blistering in a shaped product made of the methacrylic resin composition of the present invention can be made very low. Each of the $Mw_{C-B1}$ value and the $Mn_{C-B1}$ value is a molecular weight determined by GPC (gel permeation chromatography) and expressed in terms of standard polystyrene.

A block copolymer [C-B2], preferably used as the compound [C] in the present invention, comprises 10 to 80% by mass, preferably 20 to 70% by mass of a polymer block [c1] comprising mainly a structural unit derived from a methacrylic acid ester and 20 to 90% by mass, preferably 30 to 80% by mass of a polymer block [c2] comprising mainly a structural unit derived from an acrylic acid ester (the total amount of the polymer block [c1] and the polymer block [c2] is 100% by mass).

The number of the polymer block [c1] comprised in one molecule may be one, two or more. In the case in which two or more polymer blocks [c1] are comprised in one molecule, each of the polymer blocks [c1] may have the same structural units proportion and the same molecular weight or may have different structural units proportions and different molecular weights.

The number of the polymer block [c2] comprised in one molecule may be one, two, or more. In the case in which two or more polymer blocks [c2] are comprised in one molecule, the polymer blocks [c2] may have the same structural units proportion and the same molecular weight or may have different structural units proportions and different molecular weights.

A ratio of the total mass of the polymer block [c1] to the total mass of polymer block [c2] in the block copolymer [C-B2] is preferably 10/90 to 80/20, more preferably 20/80 to 70/30.

The polymer block [c1] comprises mainly a structural unit derived from a methacrylic acid ester. The content of the structural unit derived from a methacrylic acid ester in the polymer block [c1] is preferably not less than 80% by mass, more preferably not less than 90% by mass, further preferably not less than 95% by mass, particularly preferably not less than 98% by mass.

Examples of the methacrylic acid ester can include methyl methacrylate, ethyl methacrylate, n-propyl methacrylate, isopropyl methacrylate, n-butyl methacrylate, isobutyl methacrylate, s-butyl methacrylate, t-butyl methacrylate, amyl methacrylate, isoamyl methacrylate, n-hexyl methacrylate, cyclohexyl methacrylate, 2-ethylhexyl methacrylate, pentadecyl methacrylate, dodecyl methacrylate, isobornyl methacrylate, phenyl methacrylate, benzyl methacrylate, phenoxyethyl methacrylate, 2-hydroxyethyl methacrylate, 2-methoxyethyl methacrylate, glycidyl methacrylate, allyl methacrylate, and the like. Among these, methacrylic acid alkyl esters such as methyl methacrylate, ethyl methacrylate, isopropyl methacrylate, n-butyl methacrylate, t-butyl methacrylate, cyclohexyl methacrylate, and isobornyl methacrylate are preferable and methyl methacrylate is more preferable from the viewpoint of enhancement in transparency and heat resistance. The methacrylic acid ester may be used alone or in combination of two or more.

The polymer block [c1] may comprise a structural unit derived from a monomer other than a methacrylic acid ester provided that the object and the effects of the present invention are not impaired. The content of the structural unit derived from a monomer other than a methacrylic acid ester in the polymer block [c1] is preferably not more than 20% by mass, more preferably not more than 10% by mass, further preferably not more than 5% by mass, particularly preferably not more than 2% by mass.

Examples of the monomer other than a methacrylic acid ester can include acrylic acid esters, unsaturated carboxylic acids, aromatic vinyl compounds, olefins, conjugated diene, acrylonitrile, methacrylonitrile, acrylamide, methacrylamide, vinyl acetate, vinylpyridine, vinyl ketones, vinyl chloride, vinylidene chloride, vinylidene fluoride, and the like. The monomer other than a methacrylic acid ester may be used alone or in combination of two or more.

In a weight average molecular weight of the polymer block [c1], $Mw_{c1}$, a lower limit thereof is preferably 5 thousand, more preferably 8 thousand, further preferably 12 thousand, even further preferably 15 thousand, most preferably 20 thousand and an upper limit thereof is preferably 150 thousand, more preferably 120 thousand, further preferably 100 thousand. In the case in which the block copolymer [C-B2] comprises a plurality of the polymer blocks [c1], the weight average molecular weight, $Mw_{c1}$, is the sum of the weight average molecular weights of all the polymer blocks [c1].

A ratio ($Mw_{A/}Mw_{c1}$) of the weight average molecular weight of the methacrylic resin [A] ($Mw_A$) to the weight average molecular weight of the polymer block [c1] ($Mw_{c1}$) is preferably not less than 0.5 and not more than 3.5, more preferably not less than 0.6 and not more than 2.7, further preferably not less than 0.7 and not more than 2.5. When the $Mw_{A/}Mw_{c1}$ value is too small, the impact resistance of a shaped product made of the methacrylic resin composition tends to be low. When the $Mw_{A/}Mw_{c1}$ value is too large, a shaped product made of the methacrylic resin composition tends to be impaired in terms of surface smoothness as well as temperature dependence of the haze level. When the $Mw_{A/}Mw_{c1}$ value is within the range described above, the haze level remains low regardless of changes in temperature and thereby fluctuation in the haze level is small across a wide range of temperature. This phenomenon is attributed to

small particles of the block copolymer [C-B2] uniformly dispersed within the methacrylic resin [A].

The content of the polymer block [c1] in the block copolymer [C-B2] is preferably not less than 10% by mass and not more than 80% by mass, more preferably not less than 20% by mass and not more than 70% by mass, further preferably not less than 40% by mass and not more than 60% by mass from the viewpoint of transparency, plasticity, forming processability, and surface smoothness. When the content of the polymer block [c1] is within the range described above, the methacrylic resin composition of the present invention or a shaped product made of the methacrylic resin composition of the present invention is excellent in transparency, flexibility, flex resistance, impact resistance, plasticity, and the like. In the case in which the block copolymer [C-B2] comprises a plurality of the polymer blocks [c1], the content of the polymer blocks [c1] is calculated based on the sum of the masses of all the polymer blocks [c1].

The polymer block [c2] comprises mainly a structural unit derived from an acrylic acid ester. The content of the structural unit derived from an acrylic acid ester in the polymer block [c2] is preferably not less than 45% by mass, more preferably not less than 50% by mass, further preferably not less than 60% by mass, particularly preferably not less than 90% by mass.

Examples of the acrylic acid ester can include methyl acrylate, ethyl acrylate, n-propyl acrylate, isopropyl acrylate, n-butyl acrylate, isobutyl acrylate, s-butyl acrylate, t-butyl acrylate, amyl acrylate, isoamyl acrylate, n-hexyl acrylate, cyclohexyl acrylate, 2-ethylhexyl acrylate, pentadecyl acrylate, dodecyl acrylate, isobornyl acrylate, phenyl acrylate, benzyl acrylate, phenoxyethyl acrylate, 2-hydroxyethyl acrylate, 2-methoxyethyl acrylate, glycidyl acrylate, allyl acrylate, and the like. The acrylic acid ester may be used alone or in combination of two or more.

The polymer block [c2] may comprise a structural unit derived from a monomer other than an acrylic acid ester provided that the object and the effects of the present invention are not impaired. The content of the structural unit derived from a monomer other than an acrylic acid ester in the polymer block [c2] is preferably not more than 55% by mass, more preferably not more than 50% by mass, further preferably not more than 40% by mass, particularly preferably not more than 10% by mass.

Examples of the monomer other than an acrylic acid ester can include methacrylic acid esters, unsaturated carboxylic acids, aromatic vinyl compounds, olefins, conjugated diene, acrylonitrile, methacrylonitrile, acrylamide, methacrylamide, vinyl acetate, vinylpyridine, vinyl ketones, vinyl chloride, vinylidene chloride, vinylidene fluoride, and the like. The monomer other than a methacrylic acid ester may be used alone or in combination of two or more.

From the viewpoint of enhancement in transparency of the methacrylic resin composition of the present invention, for example, the polymer block [c2] comprises preferably 50 to 90% by mass, more preferably 60 to 80% by mass of a structural unit derived from an acrylic acid alkyl ester and preferably 50 to 10% by mass, more preferably 40 to 20% by mass of a structural unit derived from a (meth)acrylic acid aromatic hydrocarbon ester.

Examples of the acrylic acid alkyl ester can include methyl acrylate, ethyl acrylate, isopropyl acrylate, n-butyl acrylate, 2-ethylhexyl acrylate, dodecyl acrylate, and the like. Among these, n-butyl acrylate and 2-ethylhexyl acrylate are preferable.

The (meth) acrylic acid aromatic hydrocarbon ester refers to an acrylic acid aromatic hydrocarbon ester or a methacrylic acid aromatic hydrocarbon ester. Examples of the (meth) acrylic acid aromatic hydrocarbon ester can include phenyl acrylate, benzyl acrylate, phenoxyethyl acrylate, styryl acrylate, phenyl methacrylate, benzyl methacrylate, phenoxyethyl methacrylate, styryl methacrylate, and the like. Among these, phenyl methacrylate, benzyl methacrylate, phenoxyethyl methacrylate, and benzyl acrylate are preferable.

In a weight average molecular weight of the polymer block [c2], $Mw_{c2}$, a lower limit is preferably 5 thousand, more preferably 15 thousand, further preferably 20 thousand, even further preferably 30 thousand, most preferably 40 thousand and an upper limit is preferably 120 thousand, more preferably 110 thousand, further preferably 100 thousand. As the $Mw_{c2}$ value decreases, the impact resistance of a shaped product made of the methacrylic resin composition tends to decrease. As the $Mw_{c2}$ value increases, the surface smoothness of a shaped product made of the methacrylic resin composition tend to be impaired. In the case in which the block copolymer [C-B2] comprises a plurality of the polymer blocks [c2], the weight average molecular weight, $Mw_{c2}$, is the sum of the weight average molecular weights of all the polymer blocks [c2].

Each of the $Mw_{c1}$ value and the $Mw_{c2}$ value is determined as follows: in each step of production of the block copolymer [C-B2], more specifically, at the completion of polymerization to produce the polymer block [c1] and at the completion of polymerization to produce the polymer block [c2], measurement of the weight average molecular weight is performed; and the difference between the weight average molecular weight measured at the start of the polymerization and the weight average molecular weight measured at the completion of the polymerization is regarded as the weight average molecular weight of the polymer block obtained by the polymerization. Each of the weight average molecular weights is measured by GPC (gel permeation chromatography) and expressed in terms of standard polystyrene.

The content of the polymer block [c2] in the block copolymer [C-B2] is preferably not less than 20% by mass and not more than 90% by mass, more preferably not less than 30% by mass and not more than 80% by mass from the viewpoint of transparency, plasticity, forming processability, and surface smoothness, for example. In the case in which the content of the polymer block [c2] is within the range described above, the methacrylic resin composition of the present

invention or a shaped product made of the methacrylic resin composition of the present invention is excellent in impact resistance, plasticity, and the like. In the case in which the block copolymer [C-B2] comprises a plurality of the polymer blocks [c2], the content of the polymer blocks [c2] is calculated based on the sum of the masses of all the polymer blocks [c2].

The block copolymer [C-B2] is not particularly limited in the configuration of bonding of the polymer block [c1] and the polymer block [c2]. Examples can include linear block copolymers such as a linear block copolymer in which an end of the polymer block [c1] is bonded to an end of the polymer block [c2] (a diblock copolymer with a [c1]-[c2] structure); a linear block copolymer in which two ends of the polymer block [c1] are respectively bonded to an end of the polymer block [c2] (a triblock copolymer with a [c2]-[c1]-[c2] structure); a linear block copolymer in which two ends of the polymer block [c2] are respectively bonded to an end of the polymer block [c1] (a triblock copolymer with a [c1]-[c2]-[c1] structure); and the like.

Further examples can include star block copolymers such as a block copolymer with a radial structure in which a plurality of arm block copolymers respectively having a [c1]-[c2] structure are bonded to each other at an end of each of the arm block copolymers (a star block copolymer with a $[[c1]-[c2]-]_mX$ structure); a block copolymer with a radial structure in which a plurality of arm block copolymers respectively having a [c2] - [c1] structure are bonded to each other at an end of each of the arm block copolymers (a star block copolymer with a $[[c2]-[c1]-]_mX$ structure); a block copolymer with a radial structure in which a plurality of arm block copolymers respectively having a [c1] - [c2] - [c1] structure are bonded to each other at an end of each of the arm block copolymers (a star block copolymer with a $[[c1]-[c2]-[c1]-]_mX$ structure); a block copolymer with a radial structure in which a plurality of arm block copolymers respectively having a [c2]-[c1]-[c2] structure are bonded to each other at an end of each of the arm block copolymers (a block copolymer with a $[[c2]-[c1]-[c2]-]_mX$ structure); and the like. Further examples can include block copolymers with a branched structure, and the like. X denotes a coupling agent residue. Among these, diblock copolymers, triblock copolymers, and star block copolymers are preferable; a diblock copolymer with a [c1]-[c2] structure, a triblock copolymer with a [c1]-[c2]-[c1] structure, a star block copolymer with a $[[c1]-[c2]-]_mX$ structure, and a star block copolymer with a $[[c1]-[c2]-[c1]-]_mX$ structure are more preferable; and a diblock copolymer with a [c1]-[c2] structure is further preferable. Each m independently denotes the number of the arm block copolymers.

The block copolymer [C-B2] may comprise a polymer block [c3] in addition to the polymer block [c1] or the polymer block [c2].

The main structural unit constituting the polymer block [c3] is a structural unit derived from a monomer other than a methacrylic acid ester or an acrylic acid ester. Examples of the monomer can include olefins such as ethylene, propylene, 1-butene, isobutylene, 1-octene and the like; conjugated dienes such as butadiene, isoprene, myrcene and the like; aromatic vinyl compounds such as styrene, $\alpha$-methylstyrene, p-methylstyrene, m-methylstyrene and the like; vinyl acetate, vinylpyridine, acrylonitrile, methacrylonitrile, vinyl ketones, vinyl chloride, vinylidene chloride, vinylidene fluoride, acrylamide, methacrylamide, $\varepsilon$-caprolactone, valerolactone; and the like.

The block copolymer [C-B2] is not particularly limited in the configuration of bonding of the polymer block [c1], the polymer block [c2] and the polymer block [c3]. Examples can include a tetrablock copolymer with a [c1]-[c2]-[c1]-[c3] structure, a pentablock copolymer with a [c3]-[c1]-[c2]-[c1]-[c3] structure, and the like. In the case in which the block copolymer [C-B2] comprises a plurality of the polymer blocks [c3], the polymer blocks [c3] may have the same structural units proportion and the same molecular weight or may have different structural units proportions and different molecular weights.

The block copolymer [C-B2] may have a functional group such as a hydroxyl group, a carboxyl group, an acid anhydride group, and an amino group in the molecular chain thereof or at an end of the molecular chain thereof, as needed.

A weight average molecular weight of the block copolymer [C-B2], $Mw_{C-B2}$, is 32 thousand to 300 thousand, preferably 40 thousand to 250 thousand, more preferably 45 thousand to 230 thousand, even further preferably 50 thousand to 200 thousand. The weight average molecular weight is determined by gel permeation chromatography and the value is expressed in terms of standard polystyrene. In the case in which the $Mw_{C-B2}$ value is within the range described above, the amount of unmelted matter that causes blistering in a shaped product made of the methacrylic resin composition of the present invention can be made very low.

The block copolymer [C-B2] has a ratio ($Mw_{C-B2}/Mn_{C-B2}$) of the weight average molecular weight ($Mw_{C-B2}$) to the number average molecular weight ($Mn_{C-B2}$) of preferably not less than 1.0 and not more than 2.0, more preferably not less than 1.0 and not more than 1.6. In the case in which the $Mw_{C-B2}/Mn_{C-B2}$ value is within the range described above, the amount of unmelted matter that causes blistering in a shaped product made of the methacrylic resin composition of the present invention can be made very low. Each of the $Mw_{C-B2}$ value and the $Mn_{C-B2}$ value is a molecular weight measured by GPC (gel permeation chromatography) and expressed in terms of standard polystyrene.

A refractive index of the block copolymer [C-B1] or [C-B2] is preferably 1.485 to 1.495, more preferably 1.487 to 1.493. In the case in which the refractive index is within this range, the methacrylic resin composition of the present invention has excellent transparency. The term "refractive index" in the present specification refers to the value measured at a wavelength of 587.6 nm (D-line), as in the examples to be hereinafter described.

A method for producing the block copolymer [C-B1] or [C-B2] is not particularly limited, and may be any method that adopts a known technique. For example, living polymerization of monomers constituting each polymer block is usually employed. Examples of the method for this living polymerization can include a method comprising an anionic polymerization using an organic alkali metal compound as a polymerization initiator in the presence of a mineral acid alkali metal salt or a mineral acid alkaline-earth metal salt; a method comprising an anionic polymerization using an organic alkali metal compound as a polymerization initiator in the presence of an organoaluminum compound; a method comprising a polymerization using an organic rare earth metal complex as a polymerization initiator; a method comprising a radical polymerization using an $\alpha$-halogenated ester compound as an initiator in the presence of a copper compound; and the like. Further examples can include a method comprising a polymerization of monomers constituting each block with the use of a polyvalent radical polymerization initiator or a polyvalent radical chain transfer agent to produce a mixture containing the block copolymer [C-B1] or [C-B2] used in the present invention; and the like. Among these methods, a method comprising an anionic polymerization with the use of an organic alkali metal compound as a polymerization initiator in the presence of an organoaluminum compound is particularly preferable, since the method produces a highly pure block copolymer [C-B1] or [C-B2], allows easy control of the molecular weight and the composition ratio, and is economical.

In a graft copolymer [C-G1] preferably used as the compound [C] in the present invention, a main chain or at least one graft side chain constituting the graft copolymer [C-G1] is composed of a polymer (PMMA) comprising not less than 90% by mass of a structural unit derived from methyl methacrylate, a polymer (AS polymer) comprising a structural unit derived from styrene and a structural unit derived from acrylonitrile, a polymer (SMA polymer) comprising a structural unit derived from styrene and a structural unit derived from maleic anhydride, a polymer (SMM polymer) comprising a structural unit derived from styrene, a structural unit derived from maleic anhydride and a structural unit derived from methyl methacrylate, or a polyvinyl butyral (PVB), and the graft copolymer [C-G1] is different from a graft copolymer [C-G2] or a graft copolymer [C-G3] described below. The polymer has an excellent compatibility with a methacrylic resin.

The polymer (PMMA) comprising not less than 90% by mass of a structural unit derived from methyl methacrylate, the polymer (AS polymer) comprising a structural unit derived from styrene and a structural unit derived from acrylonitrile, the polymer (SMA polymer) comprising a structural unit derived from styrene and a structural unit derived from maleic anhydride, the polymer (SMM polymer) comprising a structural unit derived from styrene, a structural unit derived from maleic anhydride and a structural unit derived from methyl methacrylate, or the polyvinyl butyral (PVB), which constitutes the main chain or at least one graft side chain of the graft copolymer [C-G1], is as in the description of those of the polymer block [c] constituting the block copolymer [C-B1].

A weight average molecular weight of the graft copolymer [C-G1], $Mw_{C-G1}$, is 32 thousand to 300 thousand, preferably 40 thousand to 250 thousand, more preferably 45 thousand to 230 thousand, even further preferably 50 thousand to 200 thousand. The weight average molecular weight is determined by gel permeation chromatography and the value is expressed in terms of standard polystyrene. In the case in which the $Mw_{C-G2}$ value is within the range described above, the amount of unmelted matter that causes blistering in a shaped product made of the methacrylic resin composition of the present invention can be made very low.

The graft copolymer [C-G1] can be produced by, for example, a chain transfer method [i] in which monomers for forming the polymer B are polymerized in the presence of the polymer A; a method [ii] in which a polymerizable group is introduced to an end of the polymer B to be a graft side chain and then the resulting polymer compound is subjected to copolymerization with monomers for forming the polymer A; and a method [iii] in which the polymer A to be a main chain and the polymer B to be a graft side chain are separately prepared and then these are subjected to addition or condensation reaction.

From the viewpoint of compatibility, in the graft copolymer [C-G2] preferable as the compound [C] in the present invention, the main chain of the graft copolymer [C-G2] is composed of a polycarbonate and the graft side chain of the graft copolymer [C-G2] is composed of a polymer comprising mainly a structural unit derived from an aromatic vinyl, a polymer comprising a structural unit derived from an aromatic vinyl and a structural unit derived from acrylonitrile, a polymer comprising mainly a structural unit derived from a (meth)acrylic acid ester, or a polymer comprising a structural unit derived from an aromatic vinyl, a structural unit derived from acrylonitrile or a structural unit derived from a (meth) acrylic acid ester, those polymers constituting the side chain are collectively called "aromatic vinyl/acrylonitrile/(meth)acrylic acid ester copolymer component" sometimes.

The polycarbonate constituting the main chain of the graft copolymer [C-G2] is not particularly limited in structure. As the polycarbonate, mentioned can be a polymer obtained by reaction a polyfunctional hydroxy compound with a carbonate ester-forming compound, or the like.

The polycarbonate constituting the main chain of the graft copolymer [C-G2] may be produced by the same method as that for producing a typical polycarbonate resin, more specifically, by the solution polymerization method such as the interfacial polymerization method, the pyridine method, the chloroformate method and the like, or by the melting method such as the transesterification method or the like.

A viscosity average molecular weight of the polycarbonate constituting the main chain is preferably 4000 to

100000, further preferably 5000 to 50000, particularly preferably 6000 to 30000. The viscosity average molecular weight, Mv, of the polycarbonate was calculated by the Schnell's Formula using the limiting viscosity [η] of a methylene chloride solution of the polycarbonate measured with an Ubbelohde viscometer tube at 20°C.

$$[\eta] = 1.23 \times 10^{-4} Mv^{0.83}$$

In the case in which the solution method is employed for the production, solidification and recovery of the polycarbonate from the resulting polycarbonate solution is performed by, for example, a method comprising precipitating the polycarbonate by addition of a poor solvent to the polycarbonate solution; a method comprising distilling solvent off the polycarbonate solution for concentration to obtain the polycarbonate as powders; a method comprising adding a poor solvent to the polycarbonate solution to obtain a mixture, then adding and suspending the mixture into warm water while heating, and then distilling solvent and the poor solvent off for solidification to obtain a water slurry while the slurry is circulated in a wet mill for grinding; or the like. Among these methods, use of a water slurry of the polycarbonate as an aqueous polycarbonate suspension is economic and preferable.

Examples of a dihydric phenol compound used in the production of the polycarbonate can include bis(4-hydroxyphenyl)methane, bis(4-hydroxyphenyl) ether, bis(4-hydroxyphenyl)sulfone, bis(4-hydroxyphenyl)sulfoxide, bis(4-hydroxyphenyl)sulfide, bis(4-hydroxyphenyl) ketone, 1,1-bis(4-hydroxyphenyl)ethane, 2,2-bis(4-hydroxyphenyl)propane, 2,2-bis(4-hydroxyphenyl)butane, 1,1-bis(4-hydroxyphenyl)cyclohexane, 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3-chlorophenyl)propane, 2,2-bis(4-hydroxy-3,5-dimethylphenyl)propane, 1,1-bis(4-hydroxyphenyl)-1-phenylethane, bis(4-hydroxyphenyl)diphenylmethane, and the like.

A polycarbonate having a reactive terminal unsaturated group may also be used. The polycarbonate having a terminal unsaturated group can be obtained by a polycarbonate production method, more specifically, the solution method such as the interfacial polymerization method, the pyridine method, or the chloroformate method, with the use of a molecular weight regulator or an end stopping agent, more specifically, a monofunctional compound having a double bond.

Examples of the monofunctional compound having a double bond can include unsaturated carboxylic acids such as acrylic acid, methacrylic acid, vinylacetic acid, 2-pentenoic acid, 3-pentenoic acid, 5-hexenoic acid, 9-decenoic acid, 9-undecenoic acid and the like; acid chlorides or chloroformates such as acryloyl chloride, methacryloyl chloride, sorbic acid chloride, allyl alcohol chloroformate, isopropenylphenol chloroformate, hydroxystyrene chloroformate and the like; isopropenylphenol, hydroxystyrene, hydroxyphenyl maleimide ; phenols having an unsaturated acid group, such as hydroxybenzoic acid allyl ester, hydroxybenzoic acid methylallyl ester, and the like. The monofunctional compound having a double bond may be used in combination with a conventional end stopping agent. The amount of the monofunctional compound having a double bond to be used is usually 1 to 25 mol%, preferably 1.5 to 10 mol% relative to 1 mol of the dihydric phenol compound.

The polycarbonate may also be a branched polycarbonate resin which is obtained using a branching agent in an amount of 0.01 to 3 mol%, particularly 0.1 to 1 mol% relative to the amount of the dihydric phenol compound. Examples of the branching agent can include polyhydroxy compounds such as fluoroglycine, 2,6-dimethyl-2,4,6-tri(hydroxyphenyl)heptene-3, 4,6-dimethyl-2,4,6-tri(4-hydroxyphenyl)heptene-2, 1,3,5-tri(2-hydroxyphenyl)benzene, 1,1,1-tri(4-hydroxyphenyl)ethane, 2,6-bis(2-hydroxy-5-methylbenzyl)-4-methylphenol, α,α',α"-tri(4-hydroxyphenyl)-1,3,5-triisopropylbenzene and the like; 3,3-bis(4-hydroxyaryl)oxyindole (= isatin bisphenol), 5-chloroisatin, 5,7-bromoisatin, 5-bromoisatin, and the like.

Examples of the aromatic vinyl used for producing a polymer constituting a graft side chain of the graft copolymer [C-G2] can include styrene, α-methylstyrene, α-ethylstyrene, p-methylstyrene, dimethylstyrene, ethylstyrene, isopropylstyrene, chlorostyrene, and the like. Among these, styrene is preferable.

Examples of the (meth) acrylic acid ester used for producing a polymer constituting a graft side chain of the graft copolymer can include methyl (meth)acrylate, ethyl (meth)acrylate, n-propyl (meth)acrylate, isopropyl (meth)acrylate, n-butyl (meth)acrylate, isobutyl (meth)acrylate, s-butyl (meth)acrylate, t-butyl (meth)acrylate, amyl (meth)acrylate, isoamyl (meth)acrylate, n-hexyl (meth)acrylate, cyclohexyl (meth)acrylate, 2-ethylhexyl (meth)acrylate, pentadecyl (meth)acrylate, dodecyl (meth)acrylate, isobornyl (meth)acrylate, phenyl (meth)acrylate, benzyl (meth)acrylate, phenoxyethyl (meth)acrylate, 2-hydroxyethyl (meth)acrylate, 2-methoxyethyl (meth)acrylate, glycidyl (meth)acrylate, allyl (meth)acrylate, and the like. Among these, glycidyl (meth)acrylate is preferable. The (meth)acrylic acid ester may be used alone or in combination of two or more.

In a polymer constituting the graft side chain, not only the aromatic vinyl, the (meth)acrylic acid ester, and acrylonitrile but also methacrylonitrile, maleic anhydride, a maleimide such as phenylmaleimide, cyclohexylmaleimide and the like, methacrylic acid, acrylic acid, vinyl acetate, vinyl propionate, acrylamide, methacrylamide, or the like may

be used.

In the preferable graft copolymer [C-G2], the graft side chain composed of an aromatic vinyl/acrylonitrile/(meth) acrylic acid ester copolymer component is finely dispersed in a continuous phase of the main chain composed of polycarbonate, or the main chain composed of polycarbonate is finely dispersed in a continuous phase of a graft side chain composed of an aromatic vinyl/acrylonitrile/(meth) acrylic acid ester copolymer component. The spherical particles of the graft copolymer [C-G2] are preferably almost uniformly dispersed. The particle diameter of the dispersed particles of the graft copolymer [C-G2] is preferably 0.001 to 10 μm, more preferably 0.01 to 5 μm.

The number average degree of polymerization of the side chain of the graft copolymer [C-G2] is preferably 5 to 10000, more preferably 10 to 5000, further preferably 100 to 2000. When the number average degree of polymerization is not less than 5, the resin composition tends to be excellent in weather resistance and heat resistance. When the number average degree of polymerization is not more than 10000, there is a tendency toward low melt viscosity, excellent formability, and excellent surface appearance.

The proportion of the polycarbonate component constituting the main chain of the graft copolymer [C-G2] is preferably 20 to 90% by mass, more preferably 30 to 80% by mass. The proportion of the aromatic vinyl/acrylonitrile/(meth)acrylic acid ester copolymer component constituting the side chain of the graft copolymer [C-G2] is preferably 10 to 80%, more preferably 20 to 70%. When the proportion of each component is within the range described above, there is a strong tendency toward high compatibility with the methacrylic resin [A] and the ultraviolet absorber [B] and a low likelihood of smudges on a forming apparatus due to bleed out, evaporation of the ultraviolet absorber, or the like during shaping at high temperatures.

A weight average molecular weight of the graft copolymer [C-G2], $Mw_{C-G2}$, is 32 thousand to 300 thousand, preferably 40 thousand to 250 thousand, more preferably 45 thousand to 230 thousand, even further preferably 50 thousand to 200 thousand. The weight average molecular weight is measured by gel permeation chromatography and the value is expressed in terms of standard polystyrene. When the $Mw_{C-G2}$ value is within the range described above, the amount of unmelted matter that causes blistering in a shaped product made of the methacrylic resin composition of the present invention can be made very low.

The graft copolymer [C-G2] can be produced by, for example, a chain transfer method [i] in which monomers for forming the polymer B are polymerized in the presence of the polymer A; a method [ii] in which a polymerizable group is introduced to an end of the polymer B to be a graft side chain and then the resulting polymer compound is subjected to copolymerization with monomers for forming the polymer A; and a method [iii] in which the polymer A for forming a main chain and the polymer B for forming a graft side chain are separately prepared and then these are subjected to addition or condensation reaction.

Grafting for producing the graft copolymer [C-G2] may be performed by, for example, the following method.

First a polycarbonate is cut in water to obtain a suspension, and to the suspension, added are a solution comprising a mixture of one, two, or more vinyl monomers for forming a side chain, a mixture of one, two, or more radical polymerizable organic peroxides, and a radical polymerization initiator having a decomposition temperature at a half-life period of 10 hours of 40 to 90°C.

Then, heating is performed under conditions that cause practically no decomposition of the radical polymerization initiator to impregnate the polycarbonate particles with the vinyl monomers, the radical polymerizable organic peroxides and the radical polymerization initiator. The aqueous suspension is warmed to allow copolymerization of the vinyl monomers and the radical polymerizable organic peroxide to proceed within the polycarbonate particles to obtain a grafted precursor. The resulting grafted precursor is melted and kneaded at 150 to 350°C to obtain the graft copolymer [C-G2]. The grafted precursor is melted and kneaded with the methacrylic resin [A] at 150 to 350°C to obtain a resin composition comprising the methacrylic resin [A] and the graft copolymer [C-G2].

Alternatively, the graft copolymer [C-G2] may be obtained by mixing the grafted precursor with the same polycarbonate as that constituting the main chain or with the same vinyl resin as that constituting the side chain and then melting and kneading the resulting mixture.

Examples of the radical polymerizable organic peroxide can include t-butylperoxyacryloyloxyethyl carbonate, t-amylperoxyacryloyloxyethyl carbonate, t-hexylperoxyacryloyloxyethyl carbonate, 1,1,3,3-tetramethylbutylperoxyacryloyloxyethyl carbonate, cumylperoxyacryloyloxyethyl carbonate, p-isopropylcumylperoxyacryloyloxyethyl carbonate, t-butylperoxymethacryloyloxyethyl carbonate, t-amylperoxymethacryloyloxyethyl carbonate, t-hexylperoxymethacryloyloxyethyl carbonate, 1,1,3,3-tetramethylbutylperoxymethacryloyloxyethyl carbonate, cumylperoxymethacryloyloxyethyl carbonate, p-isopropylcumylperoxymethacryloyloxyethyl carbonate, t-butylperoxymethacryloyloxyethyl carbonate, t-amylperoxyacryloyloxyethoxyethyl carbonate, t-hexylperoxyacryloyloxyethoxyethyl carbonate, 1,1,3,3-tetramethylbutylperoxyacryloyloxyethoxyethyl carbonate, cumylperoxyacryloyloxyethoxyethyl carbonate, p-isopropylcumylperoxyacryloyloxyethoxyethyl carbonate, t-butylperoxymethacryloyloxyethoxyethyl carbonate, t-amylperoxymethacryloyloxyethoxyethyl carbonate, t-hexylperoxymethacryloyloxyethoxyethyl carbonate, 1,1,3,3-tetramethylbutylperoxymethacryloyloxyethoxye thyl carbonate, cumylperoxymethacryloyloxyethoxyethyl carbonate, p-isopropylcumylperoxymethacryloyloxyethoxyethyl carbonate, t-butylperoxyacryloyloxyisopropyl carbonate, t-amylperoxyacryloyloxyisopropyl carbonate, t-hexylperoxyacryloyloxyisopropyl carbonate, 1,1,3,3-tetramethylbutylperoxyacryloyloxyisopropyl carbonate, cumylperoxyacryloyloxyisopropyl carbonate, p-isopropylcumylperoxyacryloyloxyisopropyl carbonate, t-butylperoxymethacryloyloxyisopropyl carbonate, t-amylperoxymethacryloyloxyisopropyl carbonate, t-hexylperoxymethacryloyloxyisopropyl carbonate, 1,1,3,3-tetramethylbutylperoxymethacryloyloxyisoprop yl carbonate, cumylperoxymethacryloyloxyisopropyl carbonate, p-isopropylcumylperoxymethacryloyloxyisopropyl carbonate; t-butylperoxyallyl carbonate, t-amylperoxyallyl carbonate, t-hexylperoxyallyl carbonate, 1,1,3,3-tetramethylbutylperoxyallyl carbonate, p-menthaneperoxyallyl carbonate, cumylperoxyallyl carbonate, t-butylperoxymethallyl carbonate, t-amylperoxymethallyl carbonate, t-hexylperoxymethallyl carbonate, 1,1,3,3-tetramethylbutylperoxymethallyl carbonate, p-menthaneperoxymethallyl carbonate, cumylperoxymethallyl carbonate, t-butylperoxyallyloxyethyl carbonate, t-amylperoxyallyloxyethyl carbonate, t-hexylperoxyallyloxyethyl carbonate, t-butylperoxymethallyloxyethyl carbonate, t-amylperoxymethallyloxyethyl carbonate, t-hexylperoxymethallyloxyethyl carbonate, t-butylperoxyallyloxyisopropyl carbonate, t-amylperoxyallyloxyisopropyl carbonate, t-hexylperoxyallyloxyisopropyl carbonate, t-butylperoxymethallyloxyisopropyl carbonate, t-amylperoxymethallyloxyisopropyl carbonate, t-hexylperoxymethallyloxyisopropyl carbonate; and the like.

Among these, t-butylperoxyacryloyloxyethyl carbonate, t-butylperoxymethacryloyloxyethyl carbonate, t-butylperoxyallyl carbonate, and t-butylperoxymethallyl carbonate are preferable.

The graft copolymer [C-G2] may be produced in this way or may be a commercially available product (for example, Modiper C Series (CL430-G) manufactured by NOF Corporation).

Regarding the graft copolymer [C-G3] preferable as the compound [C] in the present invention, the main chain of the graft copolymer [C-G3] is composed of a polyolefin and the graft side chain of the graft copolymer [C-G3] is composed of a polymer comprising mainly a structural unit derived from an aromatic vinyl, a polymer comprising a structural unit derived from an aromatic vinyl and a structural unit derived from acrylonitrile, a polymer comprising mainly a structural unit derived from a (meth)acrylic acid ester, or a polymer comprising a structural unit derived from an aromatic vinyl, a structural unit derived from acrylonitrile and a structural unit derived from a (meth)acrylic acid ester. Those polymers constituting the side chain may be collectively called "aromatic vinyl/acrylonitrile/(meth)acrylic acid ester copolymer component" sometimes.

The polyolefin constituting the main chain of the graft copolymer [C-G3] is not particularly limited in the polymerization behavior such as molecular weight or chain architecture. The polyolefin is a polymer comprising a monomer derived from a nonpolar $\alpha$-olefin monomer. Examples of the nonpolar $\alpha$-olefin monomer can include ethylene, propylene, butene-1, hexene-1, octene-1, 4-methylpentene-1, and the like.

Examples of the polyolefin comprising mainly a structural unit derived from a nonpolar $\alpha$-olefin monomer can include low-density polyethylene, high-density polyethylene, ultralow density polyethylene, linear low-density polyethylene, ultrahigh molecular weight polyethylene, polypropylene, polybutene, ethylene-propylene copolymer, and the like.

The polyolefin may comprise a structural unit derived from a polar vinyl monomer. Examples of the polar vinyl monomer can include $\alpha,\beta$-unsaturated carboxylic acids and metal salts thereof such as acrylic acid, methacrylic acid, fumaric acid, maleic anhydride, itaconic acid, itaconic anhydride, bicyclo[2.2.1]-5-heptene-2,3-dicarboxylic acid and the like; $\alpha,\beta$-unsaturated carboxylic acid esters such as methyl acrylate, n-butyl acrylate, isobutyl acrylate, t-butyl acrylate, 2-ethylhexyl acrylate, methyl methacrylate, ethyl methacrylate, n-butyl methacrylate, isobutyl methacrylate and the like; vinyl esters such as vinyl acetate, vinyl propionate, vinyl caproate, vinyl caprylate, vinyl laurate, vinyl stearate, vinyl trifluoroacetate and the like; unsaturated monomers having an glycidyl group such as glycidyl acrylate, glycidyl methacrylate, itaconic acid monoglycidyl ester; and the like.

Specific examples of (co)polymers comprising the nonpolar $\alpha$-olefin monomer and the polar vinyl monomer can include ethylene-acrylic acid copolymer, ethylene-methyl acrylate copolymer, ethylene-isopropyl acrylate copolymer, ethylene-n-butyl acrylate copolymer, ethylene-isobutyl acrylate copolymer, ethylene-2-ethylhexyl acrylate copolymer, ethylene-methacrylic acid copolymer, ethylene-methyl methacrylate copolymer, ethylene-isopropyl methacrylate copolymer, ethylene-n-butyl methacrylate copolymer, ethylene-isobutyl methacrylate copolymer, ethylene-2-ethylhexyl methacrylate copolymer, ethylene-vinyl acetate copolymer, ethylene-vinyl propionate copolymer, ethylene-ethyl acrylate-maleic anhydride copolymer, ethylene-ethyl acrylate-glycidyl methacrylate copolymer, ethylene-vinyl acetate-glycidyl methacrylate copolymer, ethylene-glycidyl methacrylate copolymer, and the like.

These polyolefins may be used alone or in mixture of two or more. From the viewpoint of fluidity, polyethylene, polypropylene, and polybutene are preferable among these polyolefins.

As the polymer constituting a graft side chain of the graft copolymer [C-G3], the same ones as described in the polymer constituting a graft side chain of the graft copolymer [C-G2] may be used.

In the preferable graft copolymer [C-G3], the graft side chain composed of an aromatic vinyl/acrylonitrile/(meth)acrylic acid ester copolymer component finely dispersed in a continuous phase of the main chain composed of polyolefin, or the main chain composed of polyolefin finely dispersed in a continuous phase of the graft side chain composed of an aromatic vinyl/acrylonitrile/(meth)acrylic acid ester copolymer component. The spherical particles of the graft copolymer [C-G3] are preferably almost uniformly dispersed. The particle diameter of the dispersed particles

of the graft copolymer [C-G3] is preferably 0.001 to 10 μm, more preferably 0.01 to 5 μm.

The number average polymerization degree of a side chain of the graft copolymer [C-G3] is preferably 5 to 10000, more preferably 10 to 5000, further preferably 100 to 2000. When the number average polymerization degree is not less than 5, the resin composition tends to be excellent in weather resistance or heat resistance. When the number average polymerization degree is not more than 10000, there is a tendency toward low melt viscosity, excellent formability, and excellent surface appearance.

The content of the polyolefin component in the main chain of the graft copolymer [C-G3] is preferably 20 to 90% by mass, more preferably 30 to 80% by mass. The content of the aromatic vinyl/acrylonitrile/(meth)acrylic acid ester copolymer component in a side chain of the graft copolymer is preferably 10 to 80%, more preferably 20 to 70%. When the content of each component is out of this range, the compatibility between the methacrylic resin [A] and the ultraviolet absorber [B] may decrease and smudges may occur on a forming apparatus due to bleed out, evaporation of the ultraviolet absorber, or the like during forming process at high temperatures.

The weight average molecular weight of the graft copolymer [C-G3] , $Mw_{C-G3}$, is 32 thousand to 300 thousand, preferably 40 thousand to 250 thousand, more preferably 45 thousand to 230 thousand, even further preferably 50 thousand to 200 thousand. The weight average molecular weight is measured by gel permeation chromatography and the value is expressed in terms of standard polystyrene. When the $Mw_{C-G3}$ value is within this range, the amount of unmelted matter that causes blistering in a shaped product composed of the methacrylic resin composition of the present invention can be made very low.

The graft copolymer [C-G3] can be produced by, for example, a chain transfer method [i] comprising polymerizing monomers for forming the polymer B in the presence of the polymer A; a method [ii] comprising copolymerizing a polymer compound with monomers for forming the polymer A, in which the polymer compound is made by introducing a polymerizable group to an end of the polymer B for a graft side chain; a method [iii] comprising each preparing the polymer A for a main chain and the polymer B for a graft side chain, and subjecting them to addition or condensation reaction.

Grafting for producing the graft copolymer [C-G3] may be performed by the following method, for example. First, an olefin (co)polymer is suspended in water. To the resulting suspension, a solution is added, the solution comprises a mixture of one, two or more vinyl monomers for forming a side chain; a mixture of one, two or more radical polymerizable organic peroxides; and a radical polymerization initiator having a degradation temperature of 40 to 90°C at a half life period of 10 hours.

Then, heating is performed under conditions that cause substantially no degradation of the radical polymerization initiator. Thus, the vinyl monomers, the radical polymerizable organic peroxide and the radical polymerization initiator are impregnated within the olefin (co)polymer. The temperature of the aqueous suspension is raised to allow copolymerization of the vinyl monomers and the radical polymerizable organic peroxide to proceed within the olefin (co)polymer. Thus, a grafted precursor is obtained.

The grafted precursor can be melted and kneaded at 100 to 350°C to obtain the graft copolymer [C-G3] . The grafted precursor can be melted and kneaded together with the methacrylic resin [A] at 100 to 350°C to obtain a resin composition comprising the methacrylic resin [A] and the graft copolymer [C-G3].

Alternatively, the graft copolymer [C-G3] may be obtained by mixing the grafted precursor with the same polyolefin as that constituting the main chain or with the same vinyl resin as that constituting a side chain and then melting and kneading the resulting mixture.

The graft copolymer [C-G3] may be produced in this way or may be a commercially available product (for example, Modiper A1100, Modiper A4300, or Modiper A4400 manufactured by NOF Corporation) or the like.

Among the graft copolymers as the compound [C] preferable in the present invention, the graft copolymer [C-G1] or the graft copolymer [C-G2] is preferably used from the viewpoint that the graft copolymer has excellent compatibility with the methacrylic resin [A] and the resulting methacrylic resin composition has enhanced transparency.

The methacrylic resin composition of the present invention may contain a filler, as needed, provided that the effects of the present invention are not impaired. Examples of the filler can include calcium carbonate, talc, carbon black, titanium oxide, silica, clay, barium sulfate, magnesium carbonate, and the like. The amount of the filler that can be contained in the methacrylic resin composition of the present invention is preferably not more than 3% by mass, more preferably not more than 1.5% by mass.

The methacrylic resin composition used in the present invention may contain an additional polymer provided that the effects of the present invention are not impaired. Examples of the additional polymer can include phenoxy resin, polycarbonate resin, polyolefin resins such as polyethylene, polypropylene, polybutene-1, poly-4-methylpentene-1, polynorbornene and the like; ethylene ionomers; styrene resins such as polystyrene, styrene-maleic anhydride copolymers, high-impact polystyrene, AS resins, ABS resins, AES resins, AAS resins, ACS resins, MBS resins and the like; methyl methacrylate polymers, methyl methacrylate-styrene copolymers; polyester resins such as polyethylene terephthalate, polybutylene terephthalate and the like; polyamides such as nylon 6, nylon 66, polyamide elastomers and the like; polyvinyl chloride, polyvinylidene chloride, polyvinyl alcohol, ethylene-vinyl alcohol copolymers, polyacetal, polyvinylidene fluoride, polyurethane, modified polyphenylene ether, polyphenylene sulfide, modified silicone resins; acrylic core-shell rubber, silicone rubber; styrene thermoplastic elastomers such as SEPS, SEBS, SIS and the like; olefin rubbers such as IR, EPR, EPDM and the like. The additional polymer that may be contained is preferably a polycarbonate resin from the viewpoints of transparency and heat resistance. The content of the polymer in the methacrylic resin composition is preferably not more than 20% by mass, more preferably not more than 10% by mass.

The methacrylic resin composition of the present invention may contain supplementary additives such as an antioxidant, a thermal degradation inhibitor, a light stabilizer, a lubricant, a mold release agent, a polymer processing aid, an antistatic agent, a flame retardant, a dye and a pigment, a light dispersing agent, an organic coloring agent, a delustering agent, an impact resistance modifier, a fluorescent substance and the like, provided that the effects of the present invention are not impaired.

The antioxidant, by itself, has an effect to prevent oxidative degradation of a resin caused in the presence of oxygen. Examples of the antioxidant can include phosphorus antioxidants, hindered phenol antioxidants, thioether antioxidants, and the like. Among these, from the viewpoint of the effect to prevent optical properties from being impaired due to discoloration, phosphorus antioxidants or hindered phenol antioxidants is preferable, and a combined use of a phosphorus antioxidant and a hindered phenol antioxidant is more preferable.

When a phosphorus antioxidant and a hindered phenol antioxidant are used in combination, the mass ratio of the phosphorus antioxidant to the hindered phenol antioxidant is preferably from 0.2/1 to 2/1, more preferably from 0.5/1 to 1/1.

Examples of the phosphorus antioxidant can include 2,2-methylenebis(4,6-di-t-butylphenyl)octyl phosphite (manufactured by ADEKA CORPORATION, trade name: ADK STAB HP-10), tris(2,4-di-tert-butylphenyl)phosphite (manufactured by BASF, trade name: IRGAFOS 168), 3,9-bis(2,6-di-t-butyl-4-methylphenoxy)-2,4,8,10-tet raoxa-3,9-diphosphaspiro [5.5] undecane (manufactured by ADEKA CORPORATION, trade name: ADK STAB PEP-36), and the like.

As the hindered phenol antioxidant, 3,5-di-tert-butyl-4-hydroxytoluene, pentaerythrityl-tetrakis[3-(3,5-di-tert-butyl-4-hydr oxyphenyl)propionate] (manufactured by BASF, trade name: IRGANOX 1010), octadecyl-3-(3,5-di-tert-butyl-4-hydroxyphenyl)propi onate (manufactured by BASF, trade name: IRGANOX 1076) and the like are preferable.

The thermal degradation inhibitor can trap a polymer radical that is generated at high heat in the practical absence of oxygen to prevent thermal degradation of the resin.

As the thermal degradation inhibitor, 2-t-butyl-6-(3'-tert-butyl-5'-methyl-hydroxybenzyl)-4-methylphenyl acrylate (manufactured by Sumitomo Chemical Company, Limited, trade name: SUMILIZER GM), 2,4-di-t-amyl-6-(3',5'-di-tert-amyl-2'-hydroxy-α-met hylbenzyl)phenyl acrylate (manufactured by Sumitomo Chemical Company, Limited, trade name: SUMILIZER GS) and the like are preferable.

The light stabilizer is a compound that is known to have a primary function of trapping a radical generated by light oxidation. Preferable examples of the light stabilizer can include hindered amines such as compounds having a 2,2,6,6-tetraalkylpiperidine skeleton, and the like.

Examples of the lubricant can include stearic acid, behenic acid, stearamide, methylenebisstearamide, hydroxystearate triglyceride, paraffin wax, ketone wax, octyl alcohol, hydrogenated oil, and the like.

The mold release agent is a compound having a function of facilitating release from a mold that is used in forming. Examples of the mold release agent can include higher alcohols such as cetyl alcohol, stearyl alcohol and the like; glycerol higher fatty acid esters such as stearic acid monoglyceride, stearic acid diglyceride and the like. As the mold release agent in the present invention, a higher alcohol and a glycerol fatty acid monoester are preferably used in combination. When a higher alcohol and a glycerol fatty acid monoester are used in combination, the mass ratio of the higher alcohol to the glycerol fatty acid monoester is preferably within the range of 2.5/1 to 3.5/1, more preferably within the range of 2.8/1 to 3.2/1.

The polymer processing aid is usually a polymer particle with a particle diameter of 0.05 to 0.5 μm that can be produced by the emulsion polymerization method. Such a polymer particle may be a monolayer particle composed of a polymer having a single composition ratio and a single limiting viscosity, or may be a multilayer particle composed of two or more polymers having different composition ratios or different limiting viscosities. Among these, preferable examples thereof include, for example, particles having a two-layer structure comprising an inner layer being a polymer layer with a relatively low limiting viscosity and an outer layer being a polymer layer with a relatively high limiting viscosity of not less than 5 dl/g. The limiting viscosity of the polymer processing aid is preferably 3 to 6 dl/g.

Examples of the impact resistance modifier can include core-shell modifiers containing acrylic rubber or diene rubber as a core layer component; modifiers containing a plurality of rubber particles; and the like.

Preferable as the organic coloring agent is a compound having a function of converting ultraviolet light, which is thought to be harmful to a resin, into visible light.

Examples of the light dispersing agent and the delustering agent can include glass microparticles, polysiloxane crosslinked microparticles, crosslinked polymer microparticles, talc, calcium carbonate, barium sulfate, and the like.

Examples of the fluorescent substance can include fluorescent pigments, fluorescent dyes, fluorescent white dyes, fluorescent brighteners, fluorescent bleaching agents, and the like.

These supplementary additives may be used alone or in combination of two or more. These additives may be

added to a polymerization reaction solution during production of the methacrylic resin [A], the compound [C], or the like, or may be added to the methacrylic resin [A], the compound [C], or the like that has been produced, or may be added during preparation of the methacrylic resin composition. From the viewpoint of inhibiting defective appearance of the resulting film, the sum of the amounts of the supplementary additives contained in the methacrylic resin composition of the present invention is preferably not more than 7% by mass, more preferably not more than 5% by mass, and further preferably not more than 4% by mass relative to the amount of the methacrylic resin [A].

The method for preparing the methacrylic resin composition of the present invention is not particularly limited. Examples thereof can include a method comprised of subjecting a monomer mixture comprising methyl methacrylate to polymerization in the presence of the compound [C] to produce the methacrylic resin [A]; a method comprised of melt kneading the methacrylic resin [A], the ultraviolet absorber [B], and the compound [C] ; and the like. Among these methods, the melt kneading method is preferable for its simple procedure. The additional polymer and the supplementary additives may be mixed during melt kneading, as needed. Alternatively, the methacrylic resin [A] may be first mixed with the additional polymer and the supplementary additives and then mixed with the ultraviolet absorber [B] and the compound [C] . Further alternatively, the ultraviolet absorber [B] may be first mixed with the additional polymer and the supplementary additives and then mixed with the methacrylic resin [A] and the compound [C]. Even further alternatively, the compound [C] may be first mixed with the additional polymer and the supplementary additives and then mixed with the methacrylic resin [A] and the ultraviolet absorber [B]. The method of preparation may also be any other methods. Kneading can be performed using a known mixing apparatus or a known kneading apparatus, such as a kneader-ruder, a single screw or twin screw extruder, a mixing roll, or a Banbury mixer. Among these, a twin screw extruder is preferable. The temperature during mixing and kneading can be controlled where appropriate depending on, for example, the melting temperatures of the methacrylic resin [A] and the compound [C] to be used, and is preferably 110°C to 300°C.

The methacrylic resin composition of the present invention comprises the methacrylic resin [A] in an amount of preferably 75 to 99.8% by mass, more preferably 82 to 99.5% by mass, further preferably 89 to 99.2% by mass. When the amount of the methacrylic resin [A] is within the range, the methacrylic resin composition has excellent transparency and excellent heat resistance.

The methacrylic resin composition of the present invention comprises the ultraviolet absorber [B] in an amount of preferably 0.1 to 15% by mass, more preferably 0.2 to 10% by mass, further preferably 0.3 to 5% by mass. When the amount of the ultraviolet absorber [B] is within the range, the light transmittance at a wavelength of 380 nm of the resulting shaped product that is made thin can be easily controlled to not more than 5%. The methacrylic resin composition of the present invention comprises the ultraviolet absorber [B] and the supplementary additives in a total content of preferably more than 1% by mass, more preferably not less than 1.5% by mass, further preferably not less than 2% by mass, even further preferably not less than 2.5% by mass. The supplementary additives refer to an antioxidant, a thermal degradation inhibitor, a light stabilizer, a lubricant, a mold release agent, a polymer processing aid, an antistatic agent, a flame retardant, a dye and a pigment, a light dispersing agent, an organic coloring agent, a delustering agent, an impact resistance modifier, and a fluorescent substance, and do not include the compound [C].

The methacrylic resin composition of the present invention comprises the compound [C] in an amount of preferably 0.1 to 10% by mass, more preferably 0.3 to 8% by mass, further preferably 0.5 to 6% by mass. When the amount of the compound [C] is within the range, the occurrence of phenomena such as bleed out and evaporation of the ultraviolet absorber is inhibited and the light resistance and the weather resistance of the methacrylic resin composition are improved while the heat resistance of the methacrylic resin composition is maintained.

The methacrylic resin composition of the present invention has a weight average molecular weight (Mw) of preferably 50 thousand to 200 thousand, more preferably 55 thousand to 160 thousand, further preferably 60 thousand to 120 thousand, particularly preferably 70 thousand to 100 thousand as determined by GPC. The methacrylic resin composition of the present invention has a molecular weight distribution (weight average molecular weight Mw/number average molecular weight Mn) of preferably 1.0 to 5.0, more preferably 1.2 to 3.0, further preferably 1.3 to 2.0, particularly preferably 1.3 to 1.7 as determined by GPC. When the Mw and the molecular weight distribution (Mw/Mn) are within these ranges, the methacrylic resin composition has excellent forming processability, and a shaped product thereof tends to have excellent impact resistance and excellent toughness.

The methacrylic resin composition of the present invention has a melt flow rate preferably of 0.1 to 30 g/10minute, further preferably 0.5 to 20 g/10minute, and most preferably 1.0 to 15 g/10minute as measured under conditions of 230°C and 3.8 kg load.

The methacrylic resin composition of the present invention has a glass transition temperature of preferably not less than 100°C, more preferably not less than 110°C, further preferably not less than 120°C, particularly preferably not less than 123°C.

The methacrylic resin composition of the present invention, when the thickness is 3.2 mm, has a haze of preferably not more than 3.0%, more preferably not more than 2.0%, and further preferably not more than 1.5%.

For improvement in convenience during storage, transportation or forming, the methacrylic resin composition of the present invention may be shaped into pellets or the like.

The methacrylic resin composition of the present invention may be made into a shaped product by a known forming method. Examples of the forming method can include the melt forming methods such as the T-die method (the lamination method or the coextrusion method, for example), the inflation method (the coextrusion method, for example), the compression forming method, the blow forming method, the calender forming method, the vacuum forming method, or the injection forming method (the insertion method, the two-color method, the pressing method, the core-back method, or the sandwich method, for example); the solution casting method; and the like.

In these forming methods, a mold is typically used for shaping the resin composition. Examples of the mold can include a mold for sheet forming, a roll for film forming, a mold for compression molding, a mold for blow molding, a calender roll, a mold for vacuum forming, a mold for injection molding, a mold for cast polymerization, and the like. The mold is not necessarily made of metal but may be a rubber roll or a mold made of tempered glass, for example. The methacrylic resin composition of the present invention tends not to cause mold smudges and thereby can be suitably used in continuous production lasting for an extended period of time or in production with many forming steps.

Pinning may be performed while the methacrylic resin composition of the present invention is extruded through a die by the melt extrusion method and then cooled on a roll for film formation. Pinning refers to the process of bringing a melted film into absolute contact with a roll after extrusion through a die. Examples of the pinning technique can include pinning with air knife, pinning by vacuum aspiration, electric pinning, and the like. Electric pinning is preferable. The apparatus for electric pinning is equipped with a pinning electrode, such as a needle electrode, a wire electrode, or a band electrode.

In the present invention, it is preferable that edge pinning (only the side ends of the melted film are brought into absolute contact with a roll) is performed first. Edge pinning may be performed by a known method. For example, immediately before the melted film comes into contact with a roll, static electricity is generated near the side ends of the melted film with the use of a pinning electrode such as a needle electrode. When the melted film carrying static electricity at the side ends comes into contact with the roll, the side ends of the melted film are brought into absolute contact with the surface of the roll by static electricity. Thus, the melted film is cooled on the roll. During cooling, tension or the like generates in the melted film. But because the both ends of the melted film are held by edge pinning, the neck-in phenomenon or a phenomenon in which the melted film becomes loose in the middle can be prevented. The position at which the pinning electrode for edge pinning is placed is not particularly limited provided that static electricity can be generated at side ends of the melted film. For example, the distance from the surface of the melted film to the pinning electrode is preferably 1 to 10 mm. When the distance from the surface of the melted film is extremely short, the pinning electrode may come into contact with the melted film. When the distance from the surface of the melted film is extremely long, the contact may not be sufficient. It is preferable that the voltage applied to the pinning electrode do not cause spark discharge. If spark discharge occurs, the contact between the film and the surface of the roll may not be sufficient and the surface of the roll may be damaged.

Subsequently, pinning may be performed across the entire width of the surface of the roll with which the melted film is in contact. The entire-width pinning may be performed by a known method. For example, static electricity is generated across the entire width with the use of a wire electrode that extends in a direction parallel to the rotation axis of the roll. By this process, the state in which the side ends of the melted film adhere to the surface of the roll more closely than the center part of the melted film adheres is brought to a state in which the entire melted film uniformly adheres to the surface of the roll. After the latter state is reached, the melted film is peeled off the surface of the roll. Thus, pinning bubbles (air trapped between the film and the surface of the roll) and potential streaks in the width direction of the film can be prevented. This entire-width charging of electricity is preferably performed when the temperature of the melted film is lower than the glass transition temperature. The position at which the pinning electrode for entire-width pinning is placed is not particularly limited provided that static electricity can be generated across the entire width of the melted film. For example, the distance from the surface of the melted film to the wire electrode is preferably 1 to 10 mm. When the distance from the surface of the melted film is extremely short, the wire electrode may come into contact with the melted film. When the distance from the surface of the melted film is extremely long, the adherence may not be sufficiently uniform. The wire electrode is preferably placed at a position where the temperature of the melted film is lower than the glass transition temperature. When the wire electrode is placed at a position where the temperature of the melted film is higher than the glass transition temperature, streaks tend to be formed in the width direction of the film. The tension of the wire electrode thus extended is preferably not less than 5% and not more than 99%, more preferably not less than 30% and not more than 95%, further preferably not less than 50% and not more than 90% of the tensile force at break of the wire used. When the tension is extremely low, the wire tends to sag and charging of electricity tends not to be uniform enough. When the tension is extremely high, the wire tends to break. It is preferable that the voltage applied to the wire electrode do not cause spark discharge. If spark discharge occurs, charging of electricity may not be uniform enough and the surface of the roll may be damaged.

From the viewpoints of easy film formation with the use of pinning and little strain remaining in the film, the storage elastic modulus (E') of the methacrylic resin composition of the present invention is preferably $5 \times 10^5$ Pa to $0.5 \times 10^5$ Pa.

Examples of the applications of the shaped product of the present invention can include parts of advertising signs such as advertising pillars, sign stands, projecting signs, door-top signs, and roof-top signs; display parts such as showcases, dividers, and store display parts; lighting fixture parts such as fluorescent lamp covers, mood lighting covers, lampshades, and parts of luminous ceilings, luminous walls, and chandeliers; parts of interior furnishings such as pendants and mirrors; building parts such as doors, domes, safety window panes, partitions, stair skirting boards, balcony skirting boards, and roofs of buildings for recreational use; carrier-related parts such as aircraft windshields, pilot visors, motorcycle windshields, motorboat windshields, visors for buses, side visors for automobiles, rear visors, head wings, and headlight covers; electronics parts such as nameplates for audiovisuals, stereo covers, television protection masks, and covers of vending machine displays; parts of medical equipment such as incubators and X-ray machines; parts related to instruments, such as machinery covers, gauge covers, parts of experiment instruments, rulers, dials, and view windows; optics-related parts such as front-light light guide plates and films of displays, back-light light guide plates and films of displays, protective plates for liquid crystal, Fresnel lenses, lenticular lenses, and front plates of various displays, dispersing plates, and reflectors; traffic-related parts such as traffic signs, direction boards, traffic mirrors, and noise barrier walls; film parts such as surface materials for automotive interior, surface materials of mobile phones, and marking films; appliance parts such as lid materials and control panels of washers and top panels of rice cookers; other items such as greenhouses, large aquariums and water tanks, box-shaped aquariums and water tanks, clock panels, bathtubs, sanitary wares, desk mats, gaming parts, toys, and welding masks for facial protection; and the like.

The shaped product of the present invention is excellent in weather resistance and is accompanied by inhibiting bleed out of the ultraviolet absorber. Therefore, the shaped product of the present invention can be particularly suitable for various optical applications, for example, in various covers, various terminal strips, printed wiring boards, speakers, optical devices including microscopes, binoculars, cameras, and watches and clocks, and parts related to video devices, optical recording devices, optical communications devices, and information devices including viewfinders for cameras, VTRs, and projection TVs, filters, prisms, Fresnel lenses, protective films for substrates of various optical discs (such as VD, CD, DVD, MD, and LD), optical switches, optical connectors, liquid crystal displays, light guide films and sheets for liquid crystal displays, flat-panel displays, light guide films and sheets for flat-panel displays, plasma displays, light guide films and sheets for plasma displays, light guide films and sheets for electronic paper, retardation films and sheets, polarizing films and sheets, protective films and sheets for polarizing plates, protective films and sheets for polarizers, wave plates, light dispersing films and sheets, prism films and sheets, reflection films and sheets, anti-reflective films and sheets, viewing-angle-widening films and sheets, anti-glare films and sheets, brightness enhancement films and sheets, substrates in display elements used in liquid crystal applications or electroluminescence applications, touch panels, light guide films and sheets for touch panels, spacers between various front plates and various modules, and the like.

More specifically, the shaped product of the present invention can also be used in various liquid crystal display elements, electroluminescence display elements, or touch panels in mobile phones, digital information assistants, pagers, navigation systems, vehicle-mounted liquid crystal displays, liquid crystal monitors, dimming panels, office automation equipment displays, and AV system displays, for example. Due to the excellent weather resistance, the shaped product of the present invention can be particularly suitable for applications of known construction materials, including building interior and exterior components, curtain walls, roof components, roof materials, window components, gutters, exterior components, wall materials, flooring, fixture materials, road building components, retroreflective films and sheets, agricultural films and sheets, lighting covers, advertising signs, and light-transmissive noise barrier walls, for example.

The shaped product of the present invention can also be used in solar cell applications, such as solar cell surface protective films, solar cell sealing films, solar cell back protective films, solar cell substrate films, and protective films for gas barrier film.

The film of the present invention as one embodiment of the shaped product is not particularly limited in its production process. The film of the present invention can be obtained, for example, by subjecting the methacrylic resin composition to film-forming by a known method such as the solution casting method, the melt-flow casting method, the extrusion method, the inflation forming method, or the blow molding method. Among these, the extrusion method is preferable. The extrusion method can give a film having enhanced toughness, excellent ease of handling, and an excellent balance among toughness, surface hardness, and rigidity. The temperature of the methacrylic resin composition when being discharged from the extruder is set at preferably 160 to 270°C, more preferably 220 to 260°C.

From the viewpoint of obtaining a film having a highly smooth and flat surface, excellent specular gloss, and a low haze, the extrusion method is preferably carried out by extruding the methacrylic resin composition in a molten state through a T-die, and then holding the resultant between two or more mirror-surface rolls or mirror-surface belts for forming a film. The mirror-surface rolls or the mirror-surface belts are preferably made of metal. The linear pressure between a pair of mirror-surface rolls or mirror-surface belts is preferably not less than 2 N/mm, more preferably not less than 10 N/mm, further more preferably not less than 30 N/mm.

The surface temperatures of the mirror-surface rolls and the mirror-surface belts are preferably not more than 130°C. It is preferable that at least one of the paired mirror-surface rolls or at least one of the paired mirror-surface belts

has a surface temperature of not less than 60°C. With the surface temperature being thus adjusted, the methacrylic resin composition when being discharged from the extruder can be cooled faster than when being simply left to cool, thereby allowing the film having a highly smooth and flat surface and a low haze level to be readily produced.

The film of the present invention may be subjected to stretching treatment. The stretching treatment can increase mechanical strength and give a film that does not easily crack. The stretching method is not particularly limited, and examples thereof can include the uniaxial stretching method, the simultaneous biaxial stretching method, the sequential biaxial stretching method, the tubular stretching method, and the like. The stretching temperature is preferably 100 to 200°C and more preferably 120°C to 160°C from the viewpoints of uniform stretching and excellent strength of the resulting film. Stretching is usually performed at 100 to 5000%/minute in terms of length. It is preferable that the stretching be performed to 1.5 to 8 times the initial area. After stretching, heat setting can be performed so as to give a film having a low level of heat shrinkage.

The film of the present invention is not particularly limited in its thickness, but when used as an optical film, the thickness is preferably 1 to 300 μm, more preferably 10 to 50 μm, and further preferably 15 to 40 μm. As the thickness of the film decreases, the ultraviolet absorption of the film decreases. The methacrylic resin composition of the present invention tends not to cause bleed out even when the ultraviolet absorber is contained in a great amount, allowing easy enhancement of the ultraviolet absorption of the resulting thin film.

The film of the present invention, when the thickness is 40 μm, preferably has a haze of not more than 0.2%, more preferably not more than 0.1%. This range of the haze achieves excellent surface gloss and excellent transparency. In addition, this range of the haze is preferable because it enables efficient use of light from light sources in optical applications such as protective films for liquid crystal or light guide films. Furthermore, this range of the haze is preferable because it achieves excellent shaping precision in surface shaping.

The film of the present invention has excellent transparency and excellent heat resistance, has a low likelihood of mold smudges, bleed out, or the like during forming at high temperatures and thereby has reduced problems that can be caused by evaporation of the ultraviolet absorber, and has a potentially small thickness. Therefore, the film of the present invention is suitable in such applications as protective films for polarizers, retardation films, protective plates for liquid crystal, surface materials for personal digital assistants, protective films for displays of personal digital assistants, light guide films, transparent conductive films having a surface coated with silver nanowire or carbon nanotube, front plates of various displays, and the like. With the small retardation, the film of the present invention is particularly suitable as a protective film for a polarizer.

The film of the present invention has excellent transparency and excellent heat resistance and tends not to cause bleed out even when the ultraviolet absorber is contained in a great amount. Therefore, the film of the present invention can be used in, besides optical applications, IR-cut films, safety and security films for break-in prevention, shatter-proof films, decorative films, decorative metal films, back sheets for solar cells, front sheets for flexible solar cells, shrink films, in-mold label films, base material films for gas barrier film, and the like.

The film or the sheet of the present invention may have a functional layer on at least one side. Examples of the functional layer can include a hard coating layer, an antiglare layer, an anti-reflective layer, an anti-stick layer, a light dispersing layer, an anti-glare layer, an anti-static layer, a stain proofing layer, a slippery layer, a gas barrier layer, and the like.

The polarizing plate of the present invention comprises at least one protective film for a polarizer of the present invention. Preferably, a polarizer made of a polyvinyl alcohol resin is overlaid with the protective film for a polarizer of the present invention, with an adhesive-agent layer interposed therebetween.

As shown in Fig. 1, the polarizing plate according to a preferable embodiment of the present invention comprises polarizer 11, and an adhesive-agent layer 12 and a polarizer protective film 14 of the present invention in this order layered on one side of the polarizer 11, and an adhesive-agent layer 15 and an optical film 16 in this order layered on another side of the polarizer 11. An adhesive promotion layer 13 may be layered on a surface of the protective film 14 for a polarizer of the present invention, the surface being in contact with the adhesive-agent layer 12 (see Fig. 2). The protective film 14 for a polarizer of the present invention is capable of maintaining adhesion without the adhesive promotion layer 13 being layered. Provision of the adhesive promotion layer 13 is preferable in terms that higher adhesion is obtained between the adhesive-agent layer 12 and the protective film 14 for a polarizer but is unpreferable in terms of productivity and cost.

The polarizer made of a polyvinyl alcohol resin is obtained, for example, by staining a polyvinyl alcohol resin film with a dichroic substance (typically iodine or a dichroic dye) and performing uniaxial stretching. The polyvinyl alcohol resin film can be obtained by subjecting a polyvinyl alcohol resin to film-forming by any suitable method (such as the flow casting method comprised of subjecting a solution containing a resin dissolved in water or an organic solvent to flow casting, the casting method, the extrusion method, for example) .

The polyvinyl alcohol resin has a polymerization degree of preferably 100 to 5000, further preferably 1400 to 4000. The thickness of the polyvinyl alcohol resin film used in the polarizer can be appropriately selected depending on the purpose of use and the intended applications of an LCD using the polarizing plate, and is typically 5 to 80 μm.

The adhesive-agent layer that can be comprised in the polarizing plate of the present invention is not particularly limited provided that it is optically transparent. As an adhesive agent that constitutes the adhesive-agent layer, an aqueous adhesive agent, a solvent adhesive agent, a hot-melt adhesive agent, a UV-curable adhesive agent or the like can be used, for example. Among these, the aqueous adhesive agent and the UV-curable adhesive agent are preferred.

The aqueous adhesive agent is not particularly limited, and examples thereof can include vinyl polymer adhesive agents, gelatin adhesive agents, vinyl latex adhesive agents, polyurethane adhesive agents, isocyanate adhesive agents, polyester adhesive agents, epoxy adhesive agents, and the like. To the aqueous adhesive agent, a crosslinking agent, other additives, a catalyst such as an acid, and the like can be added as needed. As the aqueous adhesive agent to be used, an adhesive agent containing a vinyl polymer is preferred, and the vinyl polymer is preferably a polyvinyl alcohol resin. The polyvinyl alcohol resin can contain a water-soluble crosslinking agent such as boric acid, borax, glutaraldehyde, melamine, oxalic acid, or the like. In particular, when a polyvinyl alcohol film is used as the polarizer, an adhesive agent containing a polyvinyl alcohol resin is preferably used in terms of adhesion properties. In terms of enhancing durability, an adhesive agent containing a polyvinyl alcohol resin having an acetoacetyl group is further preferably used. The aqueous adhesive agent is usually in aqueous solution state, and has a solid content of usually 0.5 to 60% by mass.

The adhesive agent can contain a metal compound filler. The metal compound filler allows control over the fluidity of the adhesive-agent layer to make the thickness uniform, and therefore the resulting polarizing plate can have excellent appearance and be uniform across itself with no variations in adhesion properties.

The method for forming the adhesive-agent layer is not particularly limited. For example, forming can be carried out by applying the adhesive agent onto a target and then performing heating or drying. The adhesive agent may be applied to the protective film for a polarizer or the optical film of the present invention or may be applied to the polarizer. After the adhesive agent layer is formed, the protective film for a polarizer or the optical film can be pressed against the polarizer to give a laminate. Lamination can be performed with a roll press apparatus or a plate press apparatus, for example. The temperature during heating and drying and the duration of drying are determined, where appropriate, depending on the type of the adhesive agent.

The dry thickness of the adhesive-agent layer is preferably 0.01 to 10 $\mu$m, further preferably 0.03 to 5 $\mu$m.

Adhesion-enhancing treatment that can be performed on the polarizing plate of the present invention enhances adhesion between the protective film for a polarizer and the polarizer. Examples of the adhesion-enhancing treatment can include surface treatments such as corona treatment, plasma treatment, low-pressure UV treatment, and the like.

The adhesive promotion layer can also be provided. As the adhesive promotion layer, for example, mentioned can be a silicone layer having a reactive functional group. The material of the silicone layer having a reactive functional group is not particularly limited, and examples thereof can include alkoxysilanols having an isocyanate group, alkoxysilanols having an amino group, alkoxysilanols having a mercapto group, alkoxysilanols having a carboxyl group, alkoxysilanols having an epoxy group, alkoxysilanols having an unsaturated vinyl group, alkoxysilanols having a halogen group, alkoxysilanols having an isocyanate group, and the like. Among these, the silanols having an amino group are preferable. By adding a titanium catalyst or a tin catalyst to the silanol for efficient silanol reaction, adhesion force can be enhanced. Additives may also be added to the silicone having a reactive functional group. Examples of the additives can include a tackifier such as terpene resins, phenolic resins, terpene-phenol resins, rosin resins, xylene resins and the like; a stabilizer such as an ultraviolet absorber, an antioxidant, a heat stabilizer and the like. As the adhesive promotion layer, mentioned can be a layer composed of a saponified cellulose acetate butyrate resin.

The adhesive promotion layer is formed by applying and drying by known techniques. The dry thickness of the adhesive promotion layer is preferably 1 to 100 nm, further preferably 10 to 50 nm. In the applying, a chemical solution for adhesive promotion layer formation may be diluted with a solvent. The solvent for dilution is not particularly limited, and examples thereof can include alcohols. The dilute concentration is not particularly limited, but is preferably 1 to 5% by mass, more preferably 1 to 3% by mass.

The optical film 16 may be the protective film for a polarizer of the present invention or may be any other suitable optical film. The optical film to be used is not particularly limited, and examples thereof can include films made of a cellulose resin, a polycarbonate resin, a cyclic polyolefin resin, a methacrylic resin, or the like.

The cellulose resin is a cellulose ester composed of a fatty acid and a cellulose. Specific examples of the cellulose ester resin can include cellulose triacetate, cellulose diacetate, cellulose tripropionate, cellulose dipropionate, and the like. Among these, cellulose triacetate is particularly preferable. Cellulose triacetate is commercially available as many products, and is therefore advantageous in terms of accessibility and cost. Examples of the commercially available cellulose triacetate products can include products manufactured by Fujifilm Corporation under the trade names of "UV-50", "UV-80", "SH-80", "TD-80U", "TD-TAC", and "UZ-TAC", products of "KC Series" manufactured by Konica Minolta, Inc., and the like.

The cyclic polyolefin resin collectively refers to resins obtained by polymerization of cyclic olefin monomers. Examples thereof can include resins described in JP H01-240517 A, JP H03-14882 A, JP H03-122137 A, and the like. Specific examples thereof can include ring-opening (co) polymers of cyclic olefin, addition polymers of cyclic olefin, copolymers (typically, random copolymers) of cyclic olefin and $\alpha$-olefin such as ethylene, propylene and the like, graft

polymers modified with an unsaturated carboxylic acid or a derivative thereof, hydrogenated products thereof, and the like. Specific examples of the cyclic olefin can include norbornene monomers and the like.

The cyclic polyolefin resin is commercially available as various products. Specific examples thereof can include products manufactured by Zeon Corporation under the trade names of "Zeonex" and "Zeonor", products manufactured by JSR Corporation under the trade name of "Arton", products manufactured by Polyplastics Co., Ltd. under the trade name of "Topas", products manufactured by Mitsui Chemicals, Inc. under the trade name of "APEL", and the like.

As the methacrylic resin constituting the optical film 16, any suitable methacrylic resin can be used provided that the effects of the present invention are not impaired. Examples thereof can include polymethacrylic acid esters such as polymethyl methacrylate, methyl methacrylate-(meth)acrylic acid copolymers, methyl methacrylate-(meth)acrylic acid ester copolymers, methyl methacrylate-acrylic acid ester-(meth)acrylic acid copolymers, methyl (meth)acrylate-styrene copolymers (MS resins, for example), polymers having an alicyclic hydrocarbon group such as methyl methacrylate-cyclohexyl methacrylate copolymers, methyl methacrylate-norbornyl (meth)acrylate copolymers and the like.

Specific examples of the methacrylic resin constituting the optical film 16 can include Acrypet VH and Acrypet VRL20A manufactured by Mitsubishi Rayon Co., Ltd., acrylic resins obtained by copolymerization of methyl methacrylate and a maleimide monomer described in JP 2013-033237 A or WO 2013/005634 A, acrylic resins having a ring structure in the molecule described in WO 2005/108438 A, methacrylic resins having a ring structure in the molecule described in JP 2009-197151 A, methacrylic resins having a high glass transition temperature (Tg) obtained by intramolecular crosslinking or intramolecular cyclization reaction, and the like.

As the methacrylic resin constituting the optical film 16, a methacrylic resin having a lactone ring structure may also be used, for excellent heat resistance and excellent transparency as well as excellent mechanical strength given by biaxial stretching.

Examples of the methacrylic resin having a lactone ring structure can include methacrylic resins having a lactone ring structure described in JP 2000-230016 A, JP 2001-151814 A, JP 2002-120326 A, JP 2002-254544 A, JP 2005-146084 A, and the like.

The polarizing plate of the present invention can be used in an image display. Specific examples of the image display can include self-luminescent displays such as electroluminescent (EL) displays, plasma displays (PD), and field emission displays (FED), and liquid crystal displays. The liquid crystal displays comprise a liquid crystal cell and the polarizing plate disposed on at least one side of the liquid crystal cell. In this case, the protective film for a polarizer of the present invention is preferably provided on a side closer to the liquid crystal cell in the polarizing plate.

The present invention will be described more specifically by examples and comparative examples. The present invention is, however, not limited to these examples. Measurement of physical properties and the like are carried out by the following methods.

(Polymerization conversion ratio)

To a gas chromatograph GC-14A manufactured by Shimadzu Corporation, a column Inert CAP 1 (df = 0.4 μm, 0.25 mm I.D. × 60 m) manufactured by GL Sciences Inc. was attached. Measurement was performed under conditions where the injection temperature was 180°C, the detector temperature was 180°C, and the column temperature was raised from 60°C (maintained for 5 minutes) to 200°C at a temperature raising rate of 10°C/minute and maintained at 200°C for 10 minutes. Based on the results, the polymerization conversion ratio was determined by calculation.

(Weight average molecular weight (Mw), number average molecular weight (Mn), molecular weight distribution)

A chromatogram was obtained by gel permeation chromatography (GPC) under the following conditions, and the results were subjected to calculation to obtain values expressed in terms of the molecular weight of standard polystyrene. The base line was defined as a line drawn by connecting the point where the slope is changed from zero to positive on the higher molecular weight side of a peak in the GPC chart when viewed from the side of earlier retention time with the point where the slope is changed from negative to zero on the lower molecular weight side of the peak when viewed from the side of earlier retention time.

GPC device: HLC-8320 manufactured by Tosoh Corporation
Detector: Differential refractometer detector
Column: Two TSKgel SuperMultipore HZM-M columns and a Super HZ4000 column manufactured by Tosoh Corporation, connected in series
Eluting agent: Tetrahydrofuran
Flow rate of eluting agent: 0.35 ml/minute
Column temperature: 40°C
Calibration curve: Drawn by connecting 10 data points plotted for standard polystyrene

(Triad Syndiotacticity (rr))

A $^1$H-NMR spectrum of a methacrylic resin was obtained using a nuclear magnetic resonance spectrometer (manufactured by Bruker, ULTRA SHIELD 400 PLUS), with deuterated chloroform used as a solvent, under conditions at room temperature and 64 times of repetition. The resulting spectrum was used to determine the area of the 0.6 to 0.95 ppm region (X) and the area of the 0.6 to 1.35 ppm region (Y) with the spectrum of TMS being taken as 0 ppm, followed by calculation of the triad syndiotacticity (rr) by a formula: $(X/Y) \times 100$.

(Glass Transition Temperature Tg)

With a differential scanning calorimeter (manufactured by Shimadzu Corporation, DSC-50 (product number)) and according to JIS K7121, a DSC curve was obtained under conditions where the temperature of a methacrylic resin, a phenoxy resin, a polycarbonate resin, or a methacrylic resin composition was raised to 230°C (first heating), cooled to room temperature, and raised again from room temperature to 230°C at 10°C/minute (second heating). From the DSC curve that was obtained at the second heating, the midpoint glass transition temperature was determined, for use as the glass transition temperature in the present invention.

(Strength of unstretched Film)

Evaluation was performed on an unstretched film when a slight tension was applied to the unstretched film with the both ends being held by hands.

A: The appearance of the unstretched film showed no change and remained as it appeared when prepared.
B: The unstretched film was brittle and had cracks.

(Surface Smoothness)

The surface of an unstretched film or a biaxially stretched film was visually observed, and evaluated for the surface smoothness based on the following criteria.

A: Smooth and flat surface
B: Irregular surface

(Total Light Transmittance)

From a biaxially stretched film, a test piece was cut out. The total light transmittance thereof was measured according to JIS K7361-1 with a haze meter (manufactured by Murakami Color Research Laboratory, HM-150).

A methacrylic resin composition was heat pressed to give a shaped product having a thickness of 3.2 mm, and the total light transmittance thereof was measured in the same manner as described above.

(Light Transmittance at a wavelength of 380 nm) From a biaxially stretched film, a test piece was cut out. According to JIS K7361-1:1997 for the total light transmittance, the transmittance at a wavelength of 380 nm was measured with a spectrophotometer (manufactured by Shimadzu Corporation, UV-3600).

(Haze)

From a biaxially stretched film, a test piece was cut out. The haze thereof was measured according to JIS K7136 with a haze meter (manufactured by Murakami Color Research Laboratory, HM-150).

A methacrylic resin composition was heat pressed to give a shaped product having a thickness of 3.2 mm, and the haze thereof was measured in the same manner as described above.

(Stretching Properties)

By biaxially stretching an unstretched film, stretching properties were evaluated based on the following criteria.

A: Not less than 5 samples out of 10 samples gave a biaxially stretched film free of breaks or cracks.
B: Not more than 4 samples out of 10 samples gave a biaxially stretched film free of breaks or cracks.

(Roll Smudges)

A methacrylic resin composition was extruded with the use of a film forming apparatus (FS-5 model manufactured by Optical Control System) at a cylinder temperature and a T-die temperature of 290°C, a lip space of 0.5 mm, a discharge rate of 2.7 kg/hr, a roll temperature of 85°C, and a film take-up rate of 2.2 m/minute to obtain a film having a thickness of 100 $\mu$m. During the film formation, observation was performed for roll smudges. The observation for roll smudges was performed by visual examination of the surface of a metal roll as the film was being sent forward. Evaluation was performed based on the lapse of time from the start of the forming until the occurrence of white haze on the entire surface of the roll.
In addition, from an unstretched film obtained 3 hours after the start of the forming, a test piece having a size of 100 mm $\times$ 60 mm was cut out. The appearance thereof was evaluated by visual examination based on the following criteria.

A: Less than 100 blemishes observed
B: Not less than 100 blemishes observed

(Production Example 1) (Production of Methacrylic Resin [A-a])

To a 5-L glass reaction vessel equipped with a stirring blade and a three-way cock, after the interior being replaced with nitrogen, at room temperature, charged were 1600 g of toluene, 80 g of 1,2-dimethoxyethane, 53.5 g (30.9 mmol) of a 0.45-M solution of isobutylbis(2,6-di-t-butyl-4-methylphenoxy)aluminum in toluene, and 6.17 g (10.3 mmol) of a 1.3-M solution of sec-butyllithium in a mixed solvent (95% by mass of cyclohexane and 5% by mass of n-hexane). Thereto with stirring at -20°C, 550 g of methyl methacrylate purified by distillation was added dropwise over 30 minutes. After completion of the dropwise addition, stirring was performed at -20°C for 180 minutes. The color of the solution turned from yellow to colorless, at which point the conversion ratio of methyl methacrylate was 100%.
To the resulting solution, 1500 g of toluene was added for dilution. The diluted solution was then poured in 100 kg of methanol to obtain a precipitate. The resulting precipitate was dried at 80°C and 140 Pa for 24 hours to obtain a methacrylic resin [A-a] having Mw of 96100, a molecular weight distribution of 1.07, a syndiotacticity (rr) of 83%, a glass transition temperature of 133°C, and a proportion of structural unit derived from methyl methacrylate of 100% by mass.

(Production Example 2) (Production of Methacrylic Resin [A-b])

To a 5-L glass reaction vessel equipped with a stirring blade and a three-way cock after the interior being replaced with nitrogen, at room temperature, charged were 1600 g of toluene, 80 g of 1,2-dimethoxyethane, 73.3 g (42.3 mmol) of a 0.45-M solution of isobutylbis(2,6-di-t-butyl-4-methylphenoxy)aluminum in toluene, and 8.44 g (14.1 mmol) of a 1.3-M solution of sec-butyllithium in mixed solvent (95% of cyclohexane and 5% of n-hexane) . Thereto with stirring at 15°C, 550 g of methyl methacrylate purified by distillation was added dropwise over 30 minutes. After completion of the dropwise addition, stirring was performed at 15°C for 90 minutes. The color of the solution turned from yellow to colorless, at which point the polymerization conversion ratio of methyl methacrylate was 100%.
To the resulting solution, 1500 g of toluene was added for dilution. The diluted solution was then poured in 100 kg of methanol to obtain a precipitate. The resulting precipitate was dried at 80°C and 140 Pa for 24 hours to obtain a methacrylic resin [A-b] having Mw of 70000, a molecular weight distribution of 1.06, a syndiotacticity (rr) of 75%, a glass transition temperature of 131°C, and a content of structural unit derived from methyl methacrylate of 100% by mass.

(Production Example 3) (Production of Methacrylic Resin [A-c])

To an autoclave equipped with a stirrer and a sampling tube after the interior being replaced with nitrogen, 100 parts by mass of purified methyl methacrylate, 0.0054 part by mass of 2,2'-azobis(2-methylpropionitrile) (hydrogen abstraction ability: 1%, 1-hour half-life temperature: 83°C), and 0.203 part by mass of n-octyl mercaptan were added, followed by stirring to give a liquid starting material. Into the liquid starting material, nitrogen was introduced, for removing oxygen dissolved in the liquid starting material.
To a tank reactor connected to the autoclave via piping, the liquid starting material was charged to 2/3 capacity of the tank reactor. With the temperature maintained at 140°C, a polymerization reaction was initiated in a batch mode. When the polymerization conversion ratio reached 55% by mass, feeding of the liquid starting material from the autoclave into the tank reactor was started at such a flow rate that the mean residence time was 150 minutes, while the reaction product solution was discharged from the tank reactor at a flow rate corresponding to the flow rate of the liquid starting material being fed, with the temperature being maintained at 140°C. In this way, the polymerization reaction was switched to a continuous-flow mode. Thereafter, the polymerization conversion ratio in a steady state was 48% by mass.

The reaction product solution discharged from the tank reactor in a steady state was fed into a multitubular heat exchanger at an internal temperature of 230°C at such a flow rate that the mean residence time was 2 minutes, and warmed in the multitubular heat exchanger. The warmed reaction product solution was introduced into a flash evaporation apparatus for removal of volatile matter mainly comprised of an unreacted monomer to obtain a molten resin. The molten resin from which volatile matter had thus been removed was fed into a twin screw extruder at an internal temperature of 260°C, and was extruded in the form of a strand. The resulting strand was cut with a pelletizer, to obtain a methacrylic resin [A-c] as a pellet having Mw of 101000, a molecular weight distribution of 1.87, a syndiotacticity (rr) of 52%, a glass transition temperature of 120°C, and a content of structural unit derived from methyl methacrylate of 100% by mass.

(Production Example 4) (Production of Methacrylic Resin [A-d])

To an autoclave equipped with a stirrer and a sampling tube after the interior being replaced with nitrogen, 100 parts by mass of purified methyl methacrylate, 0.0074 part by mass of 2,2'-azobis(2-methylpropionitrile) (hydrogen abstraction ability: 1%, 1-hour half-life temperature: 83°C), and 0.28 part by mass of n-octyl mercaptan were added, followed by stirring to give a liquid starting material. Into the resulting liquid starting material, nitrogen was introduced, for removing oxygen dissolved in the liquid starting material.

To a tank reactor connected to the autoclave via piping, the liquid starting material was charged to 2/3 capacity of the tank reactor. With the temperature maintained at 140°C, a polymerization reaction was initiated in a batch mode first. When the polymerization conversion ratio reached 55% by mass, feeding of the liquid starting material from the autoclave into the tank reactor was started at such a flow rate that the mean residence time was 150 minutes, while the reaction product solution was discharged from the tank reactor at a flow rate corresponding to the flow rate of the liquid starting material being fed, with the temperature being maintained at 140°C. In this way, the polymerization reaction was switched to a continuous-flow mode. Thereafter, the polymerization conversion ratio in a steady state was 52% by mass.

The reaction product solution discharged from the tank reactor in a steady state was fed into a multitubular heat exchanger at an internal temperature of 230°C at such a flow rate that the mean residence time was 2 minutes, and warmed in the multitubular heat exchanger. The warmed reaction product solution was introduced into a flash evaporation apparatus for removal of volatile matter mainly comprised of an unreacted monomer to obtain a molten resin. The molten resin from which volatile matter had thus been removed was fed into a twin screw extruder at an internal temperature of 260°C, and was extruded in the form of a strand. The resulting strand was cut with a pelletizer to obtain a methacrylic resin [A-d] as a pellet having Mw of 82000, a molecular weight distribution of 1.92, a syndiotacticity (rr) of 51%, a glass transition temperature of 120°C, and a content of structural unit derived from methyl methacrylate of 100% by mass.

(Production Example 5) (Production of Methacrylic Resin [A-e])

A methacrylic resin [A-e] was produced by mixing 60 parts by mass of the methacrylic resin [A-a] and 40 parts by mass of the methacrylic resin [A-c], and kneading and extruding the resultant at 250°C with the use of a twin screw extruder (manufactured by Technovel Corporation, trade name: KZW20TW-45MG-NH-600).

(Production Example 6) (Production of Methacrylic Resin [A-f])

A methacrylic resin [A-f] was produced by mixing 60 parts by mass of the methacrylic resin [A-b] and 40 parts by mass of the methacrylic resin [A-d], and kneading and extruding the resultant at 260°C with the use of a twin screw extruder (manufactured by Technovel Corporation, trade name: KZW20TW-45MG-NH-600).

(Production Example 7) (Production of Methacrylic Resin [A-g])

An autoclave equipped with a stirrer and a sampling tube, after the interior being replaced with nitrogen, was fed with 93.4 parts by mass of purified methyl methacrylate, 6.6 parts by mass of methyl acrylate, 0.0080 part by mass of 2,2'-azobis(2-methylpropionitrile) (hydrogen abstraction ability: 1%, 1-hour half-life temperature: 83°C), and 0.45 part by mass of n-octyl mercaptan, followed by stirring to give a liquid starting material. Into the resulting liquid starting material, nitrogen was introduced, for removing oxygen dissolved in the liquid starting material.

To a tank reactor connected to the autoclave via piping, the liquid starting material was charged to its 2/3 capacity of the tank reactor. With the temperature maintained at 140°C, a polymerization reaction was initiated in a batch mode first. When the polymerization conversion ratio reached 55% by mass, feeding of the liquid starting material from the autoclave into the tank reactor was started at such a flow rate that the mean residence time was 150 minutes, while

the reaction product solution was discharged from the tank reactor at a flow rate corresponding to the flow rate of the liquid starting material being fed, with the temperature being maintained at 140°C. In this way, the polymerization reaction was switched to a continuous-flow mode. Thereafter, the polymerization conversion ratio in a steady state was 55% by mass.

The reaction product solution discharged from the tank reactor in a steady state was fed into a multitubular heat exchanger at an internal temperature of 230°C at such a flow rate that the mean residence time was 2 minutes, and warmed in the multitubular heat exchanger. The warmed reaction product solution was introduced into a flash evaporation apparatus for removal of volatile matter mainly comprised of an unreacted monomer to obtain a molten resin. The molten resin from which volatile matter had thus been removed was fed into a twin screw extruder at an internal temperature of 260°C, and was extruded in the form of a strand. The resulting strand was cut with a pelletizer, to obtain a methacrylic resin [A-g] as a pellet having Mw of 55000, a molecular weight distribution of 1.91, a syndiotacticity (rr) of 51%, a glass transition temperature of 110°C, and a content of structural unit derived from methyl methacrylate of 95% by mass.

(Production Example 8) (Production of Methacrylic Resin [A-h])

Into a twin screw extruder (manufactured by Technovel Corporation, trade name:

KZW20TW-45MG-NH-600) set at a screw rotation speed of 120 rpm and a temperature of 250°C, the methacrylic resin [A-d] was fed at 2 kg/hr. Kneading blocks were used to melt and distribute the resin within the extruder. Through a nozzle, 2 parts by mass of monomethylamine (imidizing agent: manufactured by Mitsubishi Gas Chemical Company, Inc.) relative to 100 parts by mass of the resin was injected. For distribution of the resin, a reverse flight was placed at an end of a reaction zone. After reaction, a by-product and excess monomethylamine were discharged through a vent under a reduced pressure of 20 Torr. The resin was extruded into a strand through a die provided at an outlet of the extruder, cooled in a water tank, and then formed into pellets with a pelletizer. Thus, a methacrylic resin [A-h'] was obtained.

Then, into a twin screw extruder (manufactured by Technovel Corporation, trade name:

KZW20TW-45MG-NH-600) set at a temperature of 230°C in each heat control zone and a screw rotation speed of 100 rpm, the methacrylic resin [A-h'] was fed at 1 kg/hr from a hopper. Kneading blocks were used to melt and distribute the resin within the extruder. A mixed liquid of 0.8 part by mass of dimethyl carbonate and 0.2 part by mass of triethylamine relative to 100 parts by mass of the resin was injected thereinto through a nozzle for reducing the number of carboxy groups in the resin. For distribution of the resin, a reverse flight was placed at an end of a reaction zone. After reaction, a by-product and excess dimethyl carbonate were discharged through a vent under a reduced pressure of 20 Torr. The resin was extruded into a strand through a die provided at an outlet of the extruder, cooled in a water tank, and then formed into pellets with a pelletizer. Thus, a methacrylic resin [A-h"] with a reduced acid value was obtained.

Into a twin screw extruder (manufactured by Technovel Corporation, trade name:

KZW20TW-45MG-NH-600) set at a screw rotation speed of 100 rpm and a temperature of 230°C, the methacrylic resin [A-h"] was fed at 1 kg/hr. The pressure at a vent was reduced to 20 Torr for removing volatile matter containing unreacted auxiliary materials and the like. The resin was extruded into a strand through a die provided at an outlet of the extruder, cooled in a water tank, and then formed into pellets with a pelletizer. Thus, a methacrylic resin [A-h] was obtained.

The methacrylic resin [A-h] had an imidized ratio of 3.6 mol%, Mw of 82000, Mw/Mn of 1.95, a glass transition temperature of 124°C, and an acid value of 0.27 mmol/g.

(Production Example 9) (Production of Methacrylic Resin [A-i])

A methacrylic resin [A-i] was obtained in the same manner as in the method for producing a copolymer (A-1) described in the examples section of WO 2014-021264 A.

$^{13}$C-NMR analysis revealed that the methacrylic resin [A-i] comprised 26% by mass of a structural unit derived from methyl methacrylate, 18% by mass of a structural unit containing a ring structure and derived from maleic anhydride, and 56% by mass of a structural unit derived from styrene.

The methacrylic resin [A-i] had Mw of 169000, Mw/Mn of 2.47, and Tg of 137°C.

Sumipex MHF (manufactured by Sumitomo Chemical Company, Limited) was used as a methacrylic resin [A-j].

Physical properties of the methacrylic resins [A-a] to [A-j] are shown in Table 1.

[Table 1]

Table 1

| | Production Example | | | | | | | | | |
|---|---|---|---|---|---|---|---|---|---|---|
| | 1 | 2 | 3 | 4 | 5 | 6 | 7 | 8 | 9 | |
| Methacrylic resin [A] | A-a | A-b | A-c | A-d | A-e | A-f | A-g | A-h | A-i | A-j |
| Content of structural unit from MMA [% by mass] | 100 | 100 | 100 | 100 | 100 | 100 | 95 | 96.4 | 26 | 98.7 |
| Weight average molecular weight ($Mw_A$) | 96100 | 70000 | 101000 | 82000 | 98100 | 75000 | 55000 | 82000 | 169000 | 86600 |
| Molecular weight distribution ($Mw_A/Mn_A$) | 1.07 | 1.06 | 1.87 | 1.92 | 1.41 | 1.35 | 1.91 | 1.95 | 2.47 | 1.78 |
| Syndiotacticity (rr) [%] | 83 | 75 | 52 | 51 | 70.6 | 65 | 51 | - | - | 46 |
| Glass transition temperature [°C] | 133 | 131 | 120 | 120 | 128 | 125 | 110 | 124 | 137 | 116 |
| MMA : Methyl methacrylate | | | | | | | | | | |

The ultraviolet absorber [B] used is as follows.

B-a: 2,4,6-tris(2-hydroxy-4-hexyloxy-3-methylphenyl)-1,3, 5-triazine (manufactured by ADEKA CORPORATION, LA-F70)
B-b: 2,2'-methylenebis[6-(2H-benzotriazol-2-yl)-4-t-octyl phenol] (manufactured by ADEKA CORPORATION, LA-31)

A block copolymer used as the compound [C] is described below.

Production Example 10 (Production of Diblock Copolymer [C-B2-a])

To a three-necked flask evacuated and subjected to replacement with nitrogen, 735 kg of dry toluene, 36.75 kg of 1,2-dimethoxyethane, and 39.4 kg of a toluene solution containing 20 mol of isobutylbis(2,6-di-t-butyl-4-methylphenoxy)aluminum were added at room temperature. Thereto, 1.17 mol of sec-butyllithium was added. Thereto, 39.0 kg of methyl methacrylate was added, and a reaction was allowed to proceed at room temperature for 1 hour to obtain a methyl methacrylate polymer [$c1_1$]. The methyl methacrylate polymer [$c1_1$] in the reaction product solution had a weight average molecular weight ($Mw_{c11}$) of 45800.
The temperature of the reaction product solution was made to -25°C, to which a mixed liquid of 29.0 kg of n-butyl acrylate and 10.0 kg of benzyl acrylate was added dropwise over 0.5 hours for allowing polymerization reaction to proceed from a molecular end of the methyl methacrylate polymer [$c1_1$] to obtain a diblock copolymer [C-B2-a] composed of the methyl methacrylate polymer block [$c1_1$] and an acrylic acid ester polymer block [c2] comprised of n-butyl acrylate and benzyl acrylate. The block copolymer [C-B2-a] in the reaction product solution had a weight average molecular weight ($Mw_{CB-1}$) of 92000 and a ratio of weight average molecular weight ($Mw_{CB-1}$) to number average molecular weight ($Mn_{CB-1}$) of 1.06. Based on the weight average molecular weight of the methyl methacrylate polymer [$c1_1$] being 45800, the weight average molecular weight of the acrylic acid ester polymer [c2] composed of n-butyl acrylate and benzyl acrylate was determined as 46200. The proportion of benzyl acrylate contained in the acrylic acid ester polymer [c2] was 25.6% by mass.
To the reaction product solution, 4 kg of methanol was added to stop polymerization. The resulting reaction product solution was poured into a large amount of methanol so as to precipitate the diblock copolymer [C-B2-a]. The resulting precipitate was recovered by filtering, followed by drying at 80°C and 1 torr (about 133 Pa) for 12 hours. The ratio of the mass of the methacrylic acid ester polymer block [$c1_1$] to the mass of the acrylic acid ester polymer block [c2] was 50/50.

Production Example 11 (Production of Triblock Copolymer [C-B2-b])

To a three-necked flask evacuated and subjected to replacement with nitrogen, 2003 kg of dry toluene, 100.15 kg of 1,2-dimethoxyethane, and 51.5 kg of a toluene solution containing 20 mol of isobutylbis(2,6-di-t-butyl-4-methylphenoxy)aluminum were added at room temperature. Thereto, 1.13 mol of sec-butyllithium was added. Thereto, 34.3 kg of methyl methacrylate was added, and a reaction was allowed to proceed at room temperature for 1 hour to obtain a methyl methacrylate polymer [$c1_1$]. The methyl methacrylate polymer [$c1_1$] in the reaction product solution had a weight average molecular weight ($Mw_{c11}$) of 6000.
The temperature of the reaction product solution was made to -30°C, to which 266.3 kg of n-butyl acrylate was added dropwise over 0.5 hours for allowing polymerization reaction to proceed from a molecular end of the methyl methacrylate polymer [$c1_1$] to obtain a diblock copolymer composed of the methyl methacrylate polymer block [$c1_1$] and the acrylic acid ester polymer block [c2] comprised of n-butyl acrylate. The diblock polymer in the reaction product solution had a weight average molecular weight of 53000. Based on the weight average molecular weight of the methyl methacrylate polymer block [$c1_1$] being 6000, the weight average molecular weight of the acrylic acid ester polymer block [c2] comprised of n-butyl acrylate was determined as 47000. The proportion of benzyl acrylate contained in the acrylic acid ester polymer [c2] was 0% by mass.
Subsequently, 297.3 kg of methyl methacrylate was added to made the temperature of the reaction product solution back to room temperature, followed by stirring for 8 hours for allowing polymerization reaction to proceed from a molecular end of the acrylic acid ester polymer block [c2] to obtain a triblock copolymer [C-B2-b] composed of the methyl methacrylate polymer block [$c1_1$], the acrylic acid ester polymer block [c2] comprised of n-butyl acrylate, and a methyl methacrylate polymer block [$c1_2$].
To the reaction product solution, 4 kg of methanol was added to stop polymerization. The resulting reaction product solution was poured into a large amount of methanol so as to precipitate the triblock copolymer [C-B2-b]. The resulting precipitate was recovered by filtering, followed by drying at 80°C and 1 torr (about 133 Pa) for 12 hours. The triblock copolymer [C-B2-b] had a weight average molecular weight ($Mw_{CB-2}$) of 105000 and $Mw_{CB-2}/Mn_{CB-2}$ of 1.08.

Based on the weight average molecular weight of the diblock copolymer being 53000, the weight average molecular weight of the methyl methacrylate polymer block [$c1_2$] was determined as 52000. The ratio of the total mass of the methacrylic acid ester polymer blocks [$c1_1$] and [$c1_2$] to the mass of the acrylic acid ester polymer block [c2] was 45/55.

Production Example 12 (Production of Triblock Copolymer [C-B2-c])

A triblock copolymer [C-B2-c] composed of the methyl methacrylate polymer block [$c1_1$], the acrylic acid ester polymer [c2] comprised of n-butyl acrylate, and the methyl methacrylate polymer block [$c1_2$] was obtained in the same manner as in Production Example 11 except that the amount of methyl methacrylate was changed to 124.7 kg in preparation of the polymer block [$c1_1$], the amount of n-butyl acrylate was changed to 175.6 kg, and the amount of methyl methacrylate was changed to 171.5 kg in preparation of the polymer block [$c1_2$]. The methyl methacrylate polymer block [$c1_1$] had $Mw_{c11}$ of 22000. The acrylic acid ester polymer [c2] had $Mw_{c2}$ of 31000 and a proportion of benzyl acrylate of 0% by mass. The methyl methacrylate polymer block [$c1_2$] had $Mw_{c12}$ of 30000. The triblock copolymer [C-B2-c] had $Mw_{CB-3}$ of 83000 and $Mw_{CB-3}/Mn_{CB-3}$ of 1.09. The ratio of the total mass of the methacrylic acid ester polymer blocks [$c1_1$] and [$c1_2$] to the mass of the acrylic acid ester polymer block [c2] was 37/63.

Production Example 13 (Production of Diblock Copolymer [C-B2-d])

A diblock copolymer [C-B2-d] composed of the methyl methacrylate polymer block [$c1_1$] and the acrylic acid ester polymer [c2] comprised of n-butyl acrylate was obtained in the same manner as in Production Example 10 except that the amount of methyl methacrylate was changed to 158.7 kg and the amount of n-butyl acrylate was changed to 334.2 kg.

The methyl methacrylate polymer block [$c1_1$] had $Mw_{c11}$ of 28000. The acrylic acid ester polymer [c2] had $Mw_{c2}$ of 59000 and a proportion of benzyl acrylate of 0% by mass. The diblock copolymer [C-B2-d] had $Mw_{CB-4}$ of 87000 and $Mw_{CB-4}/Mn_{CB-4}$ Of 1.10. The ratio of the mass of the methacrylic acid ester polymer block [$c1_1$] to the mass of the acrylic acid ester polymer block [c2] was 68/32.

Physical properties of the block copolymer [C-B2-a], the block copolymer [C-B2-b], the block copolymer [C-B2-c], and the block copolymer [C-B2-d] used as the compound [C] are shown in Table 2.

[Table 2]

Table 2

| | Production Example | | | |
|---|---|---|---|---|
| | 10 | 11 | 12 | 13 |
| Compound [C] (block copolymer) | C-B2-a | C-B2-b | C-B2-c | C-B2-d |
| Block configuration | Diblock | Triblock | Triblock | Diblock |
| Structural unit of polymer block [$c1_1$] | MMA | MMA | MMA | MMA |
| Structural unit of polymer block [c2] | BA/BzA | BA | BA | BA |
| Structural unit of polymer block [$c1_2$] | - | MMA | MMA | - |
| Proportion of structural unit from acrylic acid aromatic ester in [c2] [% by mass] | 25.6 | 0.0 | 0.0 | 0.0 |
| | | | | |
| $Mw_{c11}$ of polymer block [$c1_1$] | 45800 | 6000 | 22000 | 28000 |
| Mwc2 of polymer block [c2] | 46200 | 47000 | 31000 | 59000 |
| Mwc12 of polymer block [c12] | - | 52000 | 30000 | - |
| MwC-B2/MnC-B2 of block copolymer [C-B2] | 1.06 | 1.08 | 1.09 | 1.10 |
| MMA : Methyl methacrylate<br>BA : n-butyl acrylate<br>BzA : Benzyl acrylate | | | | |

The graft copolymer used as the compound [C] is described below.

C-G2-a: Graft copolymer of polycarbonate (PC) (main chain) and styrene-acrylonitrile-glycidyl methacrylate (side chain) ("Modiper CL430G" manufactured by NOF Corporation)
C-G3-a: Graft copolymer of ethylene-glycidyl methacrylate copolymer (EGMA) (main chain) and butyl acrylate-methyl methacrylate copolymer (P(BA/MMA)) (side chain) ("Modiper A4300" manufactured by NOF Corporation)
C-G3-b:: Graft copolymer of ethylene-glycidyl methacrylate copolymer (EGMA) (main chain) and styrene-acrylonitrile copolymer (AS) (side chain) ("Modiper A4400" manufactured by NOF Corporation)

Physical properties of the graft copolymer [C-G2-a], the graft copolymer [C-G3-a], and the graft copolymer [C-G3-b] are shown in Table 3.

[Table 3]

Table 3

| Compound [C] (graft copolymer) | C-G2-a | C-G3-a | C-G3-b |
|---|---|---|---|
| Main chain | PC | EGMA | EGMA |
| Side chain | P(GMA/AS) | P(BA/MMA) | AS |
| Weight average molecular weight(Mw) | 93000 | 35000 | 47000 |
| Molecular weight distribution(Mw/Mn) | 4.9 | 2.1 | 2.9 |
| PC : Polycarbonate<br>P(GMA/AS) : Glycidyl methacrylate-styrene-acrylonitrile copolymer<br>EGMA : Ethylene-glycidyl methacrylate copolymer<br>P(BA/MMA) : Butyl acrylate-methyl methacrylate copolymer<br>AS : Styrene-acrylonitrile copolymer | | | |

Additional Polymers Used

PC resin: Linear polycarbonate resin (manufactured by Sumika Styron Polycarbonate Limited, SD POLYCA TR-2201 (product number), MVR (300°C, 1.2Kg, 10 minutes; according to JIS K7210) = 210 $cm^3$/10minute, Mw = 22000, Mw/Mn = 2.0)
AS resin: Styrene-acrylonitrile random copolymer (manufactured by Nippon Steel & Sumikin Chemical Co., Ltd. , Estyrene AS-61 (product number), MFR (220°C, 10Kg, 10 minutes; according to JIS K7210) = 35 g/10minute, Mw = 130000, Mw/Mn = 2.4)
Phenoxy resin; Phenoxy (manufactured by Nippon Steel & Sumikin Chemical Co., Ltd., YP-50S (product number), MFR (230°C, 3.8Kg, 10 minutes; according to JIS K7210) = 22 g/10minute, Mw = 55000, Mw/Mn = 2.5)
The polymer processing aids used are described below. MMA refers to a structural unit derived from methyl methacrylate. BA refers to a structural unit derived from butyl acrylate.

F1: Metablen P550A manufactured by Mitsubishi Rayon Co., Ltd. (average degree of polymerization: 7734, MMA 88% by mass/BA 12% by mass)
F2: Paraloid K125P manufactured by Kureha Corporation (average degree of polymerization: 19874, MMA 79% by mass/BA 21% by mass)

<Example 1>

A methacrylic resin composition [1] was produced by mixing 100 parts by mass of the methacrylic resin [A-f], 0.9 part by mass of an ultraviolet absorber [B-a], 5 parts by mass of the block copolymer [C-B2-a], and 2 parts by mass of the processing aid [F1], and kneading and extruding the resultant at 250°C with the use of a twin screw extruder (manufactured by Technovel Corporation, trade name: KZW20TW-45MG-NH-600).
The resulting methacrylic resin composition [1] was subjected to heat press formation to form a platy shaped product of 50 mm × 50 mm × 3.2 mm, which was subjected to measurement of total light transmittance, haze, and

glass transition temperature. Physical properties of the methacrylic resin composition [1] are shown in Table 4.

The methacrylic resin composition [1] was dried at 80°C for 12 hours. The methacrylic resin composition [1] was extruded from a 20-mmφ single screw extruder (manufactured by OCS) through a T-die of 150-mm wide at a resin temperature of 260°C, and the resultant was taken by rolls having a surface temperature of 85°C to obtain a unstretched film having a width of 110 mm and a thickness of 160 μm. The unstretched film was subjected to evaluation of the surface smoothness and the strength, and the results are shown in Table 4.

The unstretched film having a thickness of 160 μm thus obtained in the way described above was cut into a piece of 100 mm × 100 mm so that two sides of the piece were parallel to the direction of extrusion. With a pantograph type biaxially stretching tester (manufactured by Toyo Seiki Seisaku-sho, Ltd.), the piece was biaxially stretched sequentially as follows: first in the direction parallel to the direction of extrusion and then in the direction orthogonal to the direction of extrusion. The biaxial stretching was performed at a stretching temperature equal to the glass transition temperature + 10°C, a stretching speed of 150%/minute in one direction, and a draw ratio of 2 in one direction (4 times the initial area), under conditions in which the piece was held for 10 seconds. The stretched piece was then taken out to room temperature for rapid cooling to obtain a biaxially stretched film having a thickness of 40 μm. The biaxially stretched film was subjected to measurement of the surface smoothness, the total light transmittance, the light transmittance at a wavelength of 380 nm, the haze, and the stretching properties. The results are shown in Table 4.

<Examples 2 to 23, Comparative Examples 1 to 10>

Methacrylic resin compositions [2] to [33] were produced in the same manner as in Example 1 except that the formulation shown in Table 4 to Table 7 was employed, and evaluated in the same manner as in Example 1. The results of the evaluation are shown in Table 4 to Table 7.

A unstretched film and a biaxially stretched film were obtained in the same manner as in Example 1 except that the methacrylic resin compositions [2] to [33] were used instead of the methacrylic resin composition [1]. The results of the evaluation are shown in Table 4 to Table 7.

In Example 20, the take-up rate of the roll was modified so that the resulting unstretched film had a width of 110 mm and a thickness of 80 μm. Biaxially stretching in Example 20 was performed in the same manner as in Example 1.

[Table 4]

Table 4

| | Example | | | | | | | |
|---|---|---|---|---|---|---|---|---|
| | 1 | 2 | 3 | 4 | 5 | 6 | 7 | 8 |
| Methacrylic resin composition | (1) | (2) | (3) | (4) | (5) | (6) | (7) | (8) |
| Methacrylic resin [A] (parts by mass) | | | | | | | | |
| A-e | | | | | | | | 100 |
| A-f | 100 | 100 | 100 | 100 | 100 | 100 | 100 | |
| Ultraviolet absorber [B] (parts by mass) | | | | | | | | |
| B-a | 0.9 | 0.9 | 0.9 | 0.9 | 0.9 | 0.9 | 0.9 | |
| B-b | | | | | | | | 2.5 |
| Compound [C] (parts by mass) | | | | | | | | |
| C-B2-a | 5 | 1 | | | | | | |
| C-B2-b | | | 1 | | | | | |
| C-B2-c | | | | 1 | | | | |
| C-B2-d | | | | | 1 | | | |
| C-G2-a | | | | | | 3 | 1 | 3 |
| Processing aid (parts by mass) | | | | | | | | |
| F-1 | 2 | 2 | 2 | 2 | 2 | 2 | 2 | |
| F-2 | | | | | | | | 2 |
| Evaluation results of methacrylic resin composition | | | | | | | | |
| Total light transmittance [%] | 92 | 92 | 92 | 92 | 92 | 92 | 92 | 92 |

(continued)

| | | | | | | | | |
|---|---|---|---|---|---|---|---|---|
| Evaluation results of methacrylic resin composition | | | | | | | | |
| Haze [%] | 0.2 | 0.2 | 0.2 | 0.2 | 0.2 | 1.0 | 0.4 | 1.0 |
| Tg [°C] | 124 | 125 | 125 | 125 | 125 | 124 | 125 | 125 |
| Evaluation results of unstretched film | | | | | | | | |
| Thickness [μm] | 160 | 160 | 160 | 160 | 160 | 160 | 160 | 160 |
| Roll smudges during film formation (time of occurrence) | ≥3hr | >3hr | ≥3hr | ≥3hr | ≥3hr | ≥3hr | ≥3hr | >3hr |
| Roll smudges during film formation (appearance) | A | A | A | A | A | A | A | A |
| Surface Smoothness | A | A | A | A | A | A | A | A |
| Strength | A | A | A | A | A | A | A | A |
| Evaluation results of biaxially stretched film | | | | | | | | |
| Thickness [μm] | 40 | 40 | 40 | 40 | 40 | 40 | 40 | 40 |
| Surface Smoothness | A | A | A | A | A | A | A | A |
| Total light transmittance [%] | 92 | 92 | 92 | 92 | 92 | 92 | 92 | 92 |
| Transmittance at 380 nm [%] | 4.1 | 4.0 | 4.0 | 4.0 | 4.0 | 4.0 | 4.0 | 3.8 |
| Haze [%] | 0.2 | 0.2 | 0.2 | 0.2 | 0.2 | 1.0 | 0.4 | 1.0 |
| Stretching properties | A | A | A | A | A | A | A | A |

[Table 5]

Table 5

| | Example | | | | | | | |
|---|---|---|---|---|---|---|---|---|
| | 9 | 10 | 11 | 12 | 13 | 14 | 15 | 16 |
| Methacrylic resin composition | (9) | (10) | (11) | (12) | (13) | (14) | (15) | (16) |
| Methacrylic resin [A] (parts by mass) | | | | | | | | |
| A-a | | | 100 | | | | | |
| A-b | | | | 100 | | | | |
| A-c | | | | | 100 | | | |
| A-d | | | | | | 100 | | |
| A-f | 100 | 100 | | | | | | |
| A-g | | | | | | | 100 | |
| A-h | | | | | | | | 100 |
| Ultraviolet absorber [B] (parts by mass) | | | | | | | | |
| B-a | 0.9 | 0.9 | 0.9 | 0.9 | 0.9 | 0.9 | 0.9 | 0.9 |
| Compound [C] (parts by mass) | | | | | | | | |
| C-B2-a | | | 3 | 3 | 5 | 5 | 5 | 5 |
| C-G3-a | 3 | | | | | | | |
| C-G3-b | | 3 | | | | | | |
| Processing aid (parts by mass) | | | | | | | | |
| F-1 | | | | | 2 | 2 | 2 | 2 |
| F-2 | 2 | 2 | 2 | 2 | | | | |
| Evaluation results of methacrylic resin composition | | | | | | | | |
| Total light transmittance [%] | Cloudy | Cloudy | 92 | 92 | 92 | 92 | 92 | 91 |
| Haze [%] | | | 0.2 | 0.2 | 0.2 | 0.2 | 0.2 | 0.3 |
| Tg [°C] | 124 | 124 | 132 | 130 | 119 | 119 | 110 | 123 |

(continued)

| | | | | | | | | |
|---|---|---|---|---|---|---|---|---|
| Evaluation results of unstretched film | | | | | | | | |
| Thickness [μm] | 160 | 160 | 160 | 160 | 160 | 160 | 160 | 160 |
| Roll smuages during film formation (time of occurrence) | ≥3hr | ≥3hr | >3hr | ≥3hr | ≥3hr | ≥3hr | ≥3hr | ≥3hr |
| Roll smudges during film formation (appearance) | A | A | A | A | A | A | A | A |
| Surface Smoothness | A | A | B | B | A | A | A | A |
| Strength | A | A | A | A | A | A | A | B |
| Evaluation results of biaxially stretched film | | | | | | | | |
| Thickness [μm] | 40 | 40 | 40 | 40 | 40 | 40 | 40 | 40 |
| Surface Smoothness | A | A | B | B | A | A | A | A |
| Total light transmittance [%] | 83 | 85 | 92 | 92 | 92 | 92 | 92 | 91 |
| Transmittance at 380 nm [%] | 4.0 | 4.0 | 4.0 | 4.0 | 4.1 | 4.1 | 4.1 | 4.1 |
| Haze [%] | 55.0 | 50.0 | 0.2 | 0.2 | 0.2 | 0.2 | 0.2 | 0.3 |
| Stretching properties | A | A | B | B | A | A | A | A |

[Table 6]

Table 6

| | Example | | | | | | |
|---|---|---|---|---|---|---|---|
| | 17 | 18 | 19 | 20 | 21 | 22 | 23 |
| Methacrylic resin composition | (17) | (18) | (19) | (20) | (21) | (22) | (23) |
| Methacrylic resin [A] (parts by mass) | | | | | | | |
| A-a | | | | | | | 100 |
| A-e | | | | 100 | | | |
| A-f | | | 100 | | 100 | 100 | |
| A-i | 100 | | | | | | |
| A-j | | 100 | | | | | |
| Ultraviolet absorber [B] (parts by mass) | | | | | | | |
| B-a | 0.9 | 0.9 | 0.9 | 1.8 | 0.9 | 0.9 | |
| B-b | | | | | | | 5.5 |
| Compound [C] (parts by mass) | | | | | | | |
| C-B2-a | 5 | 5 | 0.5 | 5 | 5 | 5 | 5 |
| C-G2-a | | | 0.5 | | | | |
| Additional polymer (parts by mass) | | | | | | | |
| PC resin | | | | | 1 | | |
| Phenoxy resin | | | | | | 1 | |
| Processing aid (parts by mass) | | | | | | | |
| F-1 | 2 | 2 | 2 | 2 | 2 | 2 | 2 |
| Evaluation results of methacrylic resin composition | | | | | | | |
| Total light transmittance [%] | 90 | 92 | 92 | 91 | 92 | 92 | 91 |
| Haze [%] | 0.3 | 0.2 | 0.2 | 0.3 | 0.2 | 0.2 | 0.2 |
| Tg [°C] | 135 | 116 | 124 | 125 | 124 | 124 | 127 |
| Evaluation results of unstretched film | | | | | | | |
| Thickness [μm] | 160 | 160 | 160 | 80 | 160 | 160 | 160 |
| Roll smuages during film formation (time of occurrence) | ≥3hr | >3hr | >3hr | ≥3hr | ≥3hr | ≥3hr | ≥3hr |
| Roll smudges during film formation (appearance) | A | A | A | A | A | A | A |

(continued)

| | | | | | | | |
|---|---|---|---|---|---|---|---|
| Evaluation results of unstretched film | | | | | | | |
| Surface Smoothness | A | A | A | A | A | A | B |
| Strength | B | A | A | A | A | A | A |
| Evaluation results of biaxially stretched film | | | | | | | |
| Thickness [μm] | 40 | 40 | 40 | 20 | 40 | 40 | 40 |
| Surface Smoothness | A | A | A | A | A | A | A |
| Total light transmittance [%] | 90 | 92 | 92 | 92 | 92 | 92 | 90 |
| Transmittance at 380 nm [%] | 4.1 | 4.0 | 4.0 | 4.0 | 4.1 | 4.1 | 0.1 |
| Haze [%] | 0.2 | 0.2 | 0.2 | 0.1 | 0.2 | 0.2 | 0.2 |
| Stretching properties | A | A | A | A | A | A | A |

[Table 7]

Table 7

| | Comparative Example | | | | | | | | | |
|---|---|---|---|---|---|---|---|---|---|---|
| | 1 | 2 | 3 | 4 | 5 | 6 | 7 | 8 | 9 | 10 |
| Methacrylic resin composition | (24) | (25) | (26) | (27) | (28) | (29) | (30) | (31) | (32) | (33) |
| Methacrylic resin [A] (parts by mass) | | | | | | | | | | |
| A-c | 100 | | | | | | | | | |
| A-d | | 100 | | | | | | | | |
| A-e | | | 100 | | | | | | | |
| A-f | | | | 100 | | 100 | 100 | 100 | 100 | 100 |
| A-h | | | | | 100 | | | | | |
| Ultraviolet absorber [B] (parts by mass) | | | | | | | | | | |
| B-a | 0.9 | 0.9 | 0.9 | 0.9 | 0.9 | | | | 0.9 | 0.9 |
| B-b | | | | | | 3 | | 20 | | |
| Compound [C] (parts by mass) | | | | | | | | | | |
| C-B2-a | | | | | | | 1 | 1 | | |
| C-G2-a | | | | | | 16 | | | | |
| Additional polymer (parts by mass) | | | | | | | | | | |
| PC resin | | | | | | | | | 3 | |
| AS resin | | | | | | | | | | 3 |
| Processing aid (parts by mass) | | | | | | | | | | |
| F-1 | 2 | 2 | 2 | 2 | 2 | 2 | 2 | 2 | 2 | 2 |

(continued)

| | Comparative Example | | | | | | | | | |
|---|---|---|---|---|---|---|---|---|---|---|
| | 1 | 2 | 3 | 4 | 5 | 6 | 7 | 8 | 9 | 10 |
| Methacrylic resin composition | (24) | (25) | (26) | (27) | (28) | (29) | (30) | (31) | (32) | (33) |
| Evaluation results of methacrylic resin composition | | | | | | | | | | |
| Total light transmittance [%] | 92 | 92 | 92 | 92 | 91 | Cloudy | 92 | Cloudy | 90 | 90 |
| Haze [%] | 0.2 | 0.2 | 0.2 | 0.2 | 0.3 | | 0.2 | | 0.2 | 0.2 |
| Tg [°C] | 119 | 119 | 126 | 124 | 123 | 116 | 125 | 110 | 125 | 124 |
| Evaluation results of unstretched film | | | | | | | | | | |
| Thickness [μm] | 160 | 160 | 160 | 160 | 160 | 160 | 160 | 160 | 160 | 160 |
| Roll smudges during film formation (time of occurrence) | 15min | 20min | 14min | 16min | 25min | ≥3hr | ≥3hr | 30min | 15min | 18min |
| Roll smudges during film formation (appearance) | B | B | B | B | B | A | A | B | B | B |
| Surface Smoothness | A | A | A | A | A | A | A | B | A | A |
| Strength | A | A | A | A | B | A | A | B | A | A |
| Evaluation results of biaxially stretched film | | | | | | | | | | |
| Thickness [μm] | 40 | 40 | 40 | 40 | 40 | 40 | 40 | 40 | 40 | 40 |
| Surface Smoothness | A | A | A | A | A | A | A | B | A | A |
| Total light transmittance [%] | 92 | 92 | 92 | 92 | 91 | 80 | 92 | Cloudy | 92 | 92 |
| Transmittance at 380 nm [%] | 4.0 | 4.0 | 4.0 | 4.0 | 4.1 | 4.0 | 90.0 | | 4.0 | 4.0 |
| Haze [%] | 0.2 | 0.2 | 0.2 | 0.2 | 0.3 | 65.0 | 0.2 | | 0.2 | 0.2 |
| Stretching properties | A | A | A | A | A | A | A | B | A | A |

These results have proven that the methacrylic resin composition of the present invention produced by adding an ultraviolet absorber and a block copolymer or a graft copolymer to a methacrylic resin has excellent heat resistance and reduced smudges on a forming apparatus during film formation. The methacrylic resin composition of the present invention has excellent formability and excellent stretching properties. By stretching the film of the present invention, a thin film having a thickness of not more than 40 μm can be obtained.

EXPLANATION OF SYMBOLS

11: polarizer
12: adhesive agent layer
13: adhesive promotion layer
14: protective film for polarizer
15: adhesive agent layer
16: optical film

## Claims

**1.** A methacrylic resin composition comprising:

75 to 99.8% by mass of a methacrylic resin [A];
0.1 to 15% by mass of an ultraviolet absorber [B]; and
0.1 to 10% by mass of a compound [C] being a block copolymer or a graft copolymer, the block copolymer or the graft copolymer having a weight average molecular weight of 32 thousand to 300 thousand.

**2.** The methacrylic resin composition according to claim 1, wherein the methacrylic resin [A] comprises not less than 90% by mass of a structural unit derived from methyl methacrylate.

**3.** The methacrylic resin composition according to claim 1 or 2, wherein the methacrylic resin [A] has a triad syndiotacticity (rr) of not less than 58%.

**4.** The methacrylic resin composition according to claim 1 or 2, wherein the methacrylic resin [A] comprises a structural unit derived from methyl methacrylate and a structural unit having a ring structure in a main chain.

**5.** The methacrylic resin composition according to claim 4, wherein the structural unit having a ring structure in a main chain is a structural unit having a >CH-O-C(=O)-group in the ring structure, a structural unit having a -C(=O)-O-C(=O)- group in the ring structure, a structural unit having a -C(=O)-N-C(=O)- group in the ring structure, or a structural unit having a >CH-O-CH< group in the ring structure.

**6.** The methacrylic resin composition according to any one of claims 1 to 5, wherein a weight average molecular weight of the methacrylic resin [A] is 50 thousand to 200 thousand.

**7.** The methacrylic resin composition according to any one of claims 1 to 6, wherein the ultraviolet absorber [B] is a compound having a benzotriazole skeleton or a compound having a triazine skeleton.

**8.** The methacrylic resin composition according to any one of claims 1 to 7, wherein
the compound [C] is a block copolymer, and
the block copolymer comprises at least one polymer block composed of
a polymer comprising not less than 90% by mass of a structural unit derived from methyl methacrylate,
a polymer comprising a structural unit derived from styrene and a structural unit derived from acrylonitrile,
a polymer comprising a structural unit derived from styrene and a structural unit derived from maleic anhydride,
a polymer comprising a structural unit derived from styrene, a structural unit derived from maleic anhydride and a structural unit derived from methyl methacrylate, or
a polyvinyl butyral.

**9.** The methacrylic resin composition according to any one of claims 1 to 7, wherein
the compound [C] is a block copolymer, and
the block copolymer comprises 10 to 80% by mass of a polymer block [c1] comprising mainly a structural unit derived from a methacrylic acid ester and 20 to 90% by mass of a polymer block [c2] comprising mainly a structural unit derived from an acrylic acid ester wherein a total amount of the polymer block [c1] and the polymer block [c2] is 100% by mass.

10. The methacrylic resin composition according to any one of claims 1 to 9, wherein the block copolymer is a diblock copolymer.

11. The methacrylic resin composition according to any one of claims 1 to 7, wherein
the compound [C] is a graft copolymer, and
the graft copolymer comprises a main chain and a graft side chain,
the main chain or at least one of the graft side chain composed of
a polymer comprising not less than 90% of a structural unit derived from methyl methacrylate,
a polymer comprising a structural unit derived from styrene and a structural unit derived from acrylonitrile,
a polymer comprising a structural unit derived from styrene and a structural unit derived from maleic anhydride,
a polymer comprising a structural unit derived from styrene, a structural unit derived from maleic anhydride and a structural unit derived from methyl
methacrylate, or
a polyvinyl butyral.

12. The methacrylic resin composition according to any one of claims 1 to 7, wherein
the compound [C] is a graft copolymer, and
the graft copolymer comprises a main chain composed of a polycarbonate and a graft side chain composed of a polymer comprising mainly a structural unit derived from an aromatic vinyl,
a polymer comprising a structural unit derived from an aromatic vinyl and a structural unit derived from acrylonitrile,
a polymer comprising mainly a structural unit derived from a (meth)acrylic acid ester, or
a polymer comprising a structural unit derived from an aromatic vinyl, a structural unit derived from acrylonitrile and a structural unit derived from a (meth)acrylic acid ester.

13. The methacrylic resin composition according to any one of claims 1 to 7, wherein
the compound [C] is a graft copolymer,
the graft copolymer comprises a main chain composed of a polyolefin and a graft side chain composed of
a polymer comprising mainly a structural unit derived from an aromatic vinyl,
a polymer comprising a structural unit derived from an aromatic vinyl and a structural unit derived from acrylonitrile,
a polymer comprising mainly a structural unit derived from a (meth)acrylic acid ester, or
a polymer comprising a structural unit derived from an aromatic vinyl, a structural unit derived from acrylonitrile and a structural unit derived from a (meth)acrylic acid ester.

14. A shaped product comprising the methacrylic resin composition according to any one of claims 1 to 13.

15. A film comprising the methacrylic resin composition according to any one of claims 1 to 13.

16. The film according to claim 15, having a thickness of 10 to 50 μm.

17. The film according to claim 15 or 16, being an uniaxially stretched film or a biaxially stretched film having a draw ratio by area of 1.5 to 8.

18. An optical film comprising the film according to any one of claims 15 to 17.

19. A protective film for a polarizer, comprising the film according to any one of claims 15 to 17.

20. A retardation film comprising the film according to any one of claims 15 to 17.

21. A polarizing plate comprising at least one of the film according to any one of claims 18 to 20.

22. A method for producing a shaped product, comprising:

melt kneading 75 to 99.8% by mass of a methacrylic resin [A], 0.1 to 15% by mass of an ultraviolet absorber [B], and 0.1 to 10% by mass of a compound [C] being a block copolymer or a graft copolymer to obtain a methacrylic resin composition, the block copolymer or the graft copolymer having a weight average molecular weight of 32 thousand to 300 thousand; and
subjecting the methacrylic resin composition to a melt shaping.

[FIG.1]

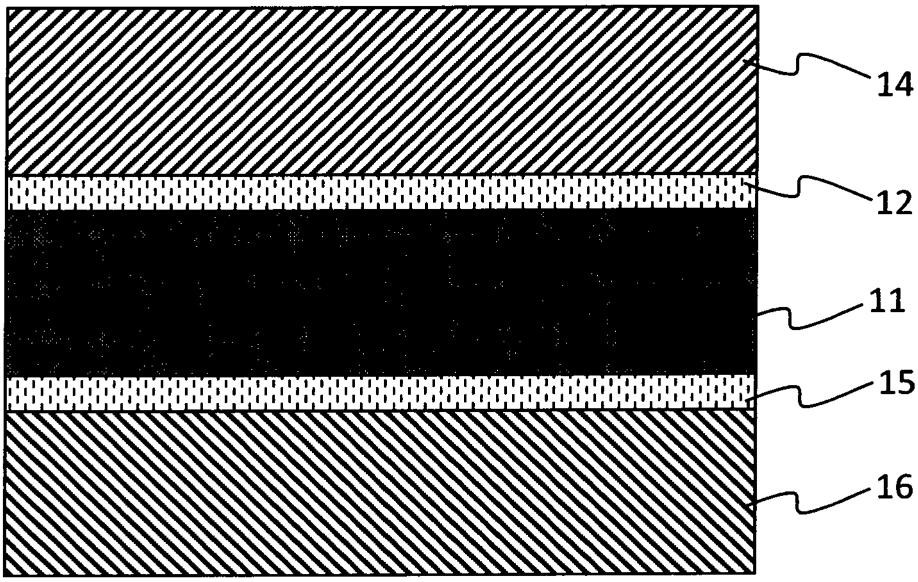


{FIG.2}

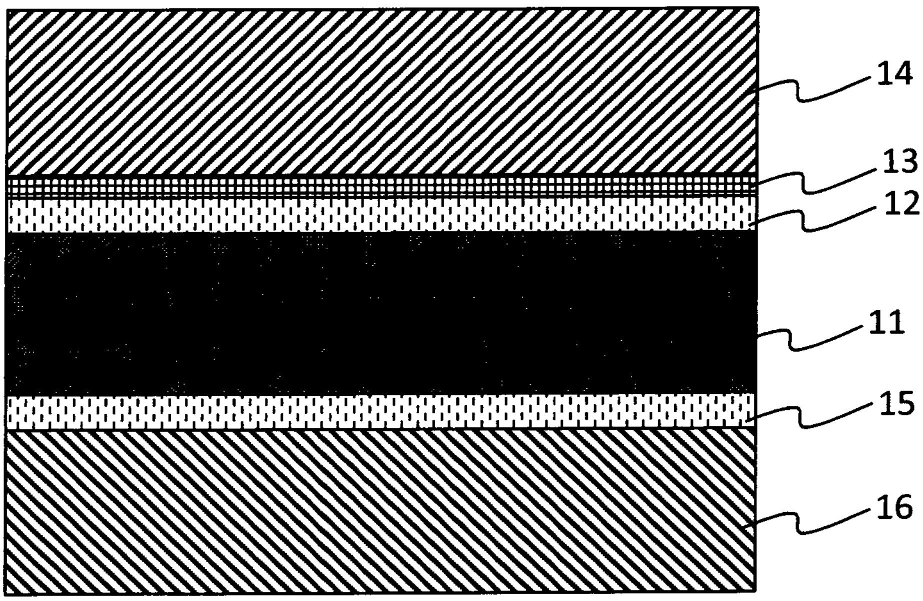

## INTERNATIONAL SEARCH REPORT

International application No.
PCT/JP2016/061926

A. CLASSIFICATION OF SUBJECT MATTER
*C08L33/12*(2006.01)i, *C08F8/48*(2006.01)i, *C08F20/14*(2006.01)i, *C08K5/3475*(2006.01)i, *C08K5/3492*(2006.01)i, *C08L51/06*(2006.01)i, *C08L53/00*(2006.01)i

According to International Patent Classification (IPC) or to both national classification and IPC

B. FIELDS SEARCHED

Minimum documentation searched (classification system followed by classification symbols)
C08L1/00-101/14, C08K3/00-13/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y<br><br>A | WO 2014/073216 A1 (Kuraray Co., Ltd.), 15 May 2014 (15.05.2014), claims; paragraphs [0006], [0013] to [0016], [0020] to [0021], [0024], [0030], [0042] to [0043], [0048], [0053], [0058] to [0059], [0068] to [0071], [0073], [0075]<br>& US 2015/0299449 A1<br>claims; paragraphs [0007], [0011] to [0014], [0020] to [0021], [0024], [0030], [0044] to [0045], [0052], [0061], [0069] to [0070], [0086] to [0089], [0091], [0093]<br>& EP 2918636 A1 & CN 104781339 A<br>& KR 10-2015-0082535 A & TW 201425437 A | 1-10,14-22<br>1-5,10-11,<br>13,18-21<br>12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 June 2016 (08.06.16) | 28 June 2016 (28.06.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | <br><br>Telephone No. |

Form PCT/ISA/210 (second sheet) (January 2015)

INTERNATIONAL SEARCH REPORT

International application No.
PCT/JP2016/061926

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | WO 2012/029304 A1 (Kuraray Co., Ltd.), 08 March 2012 (08.03.2012), claims; paragraphs [0015], [0030], [0058], [0065], [0074], [0093] to [0094] & JP 5844262 B & US 2013/0225753 A1 paragraphs [0018], [0036], [0072], [0079], [0095], [0119] to [0120] & EP 2612883 A1 & CN 103080222 A & KR 10-2013-0141466 A | 1-2,6-18,22<br>3-5,19-21 |
| X<br>Y | JP 2013-213087 A (Kaneka Corp.), 17 October 2013 (17.10.2013), claims; paragraphs [0015], [0019] to [0020], [0051], [0059] to [0060], [0063] to [0064] (Family: none) | 1-2,6-9, 11-17,22<br>1-5,10-11, 13,18-21 |
| A | JP 2010-265396 A (Toray Industries, Inc.), 25 November 2010 (25.11.2010), paragraph [0032] (Family: none) | 3 |
| A | JP 2013-124296 A (Kuraray Co., Ltd.), 24 June 2013 (24.06.2013), paragraph [0036] (Family: none) | 3 |
| A | JP 2013-032488 A (Unitika Ltd.), 14 February 2013 (14.02.2013), paragraph [0007] (Family: none) | 3 |
| P,X<br>P,A | WO 2015/182750 A1 (Kuraray Co., Ltd.), 03 December 2015 (03.12.2015), claims; paragraphs [0019], [0064], [0071], [0082], [0127], [0142], [0143], [0149], [0155], [0156], [0157], [0165], [0167] (Family: none) | 1-3,6-10, 14-22<br>4-5,11-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014073216 A
- JP 2015021047 A
- JP H08333516 A
- WO 2014021264 A
- WO 2011089794 A1
- WO 2012124395 A1
- JP 2012012476 A
- JP 2013023461 A
- JP 2013112790 A
- JP 2013194037 A
- JP 2014062228 A
- JP 2014088542 A
- JP 2014088543 A
- JP H01240517 A
- JP H0314882 A
- JP H03122137 A
- JP 2013033237 A
- WO 2013005634 A
- WO 2005108438 A
- JP 2009197151 A
- JP 2000230016 A
- JP 2001151814 A
- JP 2002120326 A
- JP 2002254544 A
- JP 2005146084 A